# EUROPÄISCHE PATENTSCHRIFT

(11) **EP 3 738 701 B1**
(45) Veröffentlichungstag und Bekanntmachung des Hinweises auf die Patenterteilung: **30.04.2025**
(21) Anmeldenummer: 20174557.7
(22) Anmeldetag: 14.05.2020
(51) Int. Cl.: B23B 31/16

(54) **SPANNFUTTER FÜR WERKZEUGMASCHINEN**
CHUCK FOR MACHINE TOOLS
MANDRIN POUR MACHINES-OUTILS

(30) Priorität: 16.05.2019 DE 102019112953
(43) Veröffentlichungstag der Anmeldung: 18.11.2020
(73) Patentinhaber: SCHUNK SE & Co. KG Spanntechnik Greiftechnik Automatisierungstechnik, 74348 Lauffen am Neckar (DE)
(72) Erfinder: Damang, Markus, 72458 Albstadt (DE)
(74) Vertreter: Paul & Albrecht Patentanwälte PartG mbB

(56) Entgegenhaltungen:
- DE-A1- 102015 204 502
- DE-A1- 4 016 527
- US-A- 1 727 535
- US-B1- 6 220 608
- US-B2- 7 040 629

## Beschreibung

Die vorliegende Erfindung betrifft ein Spannfutter nach dem Oberbegriff des Anspruchs 1 bzw. 6 für Werkzeugmaschinen, insbesondere Drehmaschinen, mit einem Futterkörper, in dessen vorderer Stirnfläche vier paarweise einander gegenüberliegende Führungsnuten zur Aufnahme jeweils einer Spannbacke ausgebildet sind, die sich radial zu einer zentralen Futterachse erstrecken.

Spannfutter für Werkzeugmaschinen dieser Art sind bekannt und werden in der Praxis in erster Linie an Drehmaschinen eingesetzt, um die zu bearbeitenden Werkstücke zu spannen. Die herkömmlichen Spannfutter bestehen aus einem formsteifen Futterkörper, der eine zentrale Aufnahmeöffnung für die Werkstücke aufweist, sowie aus mehreren Spannbacken, die in Backenführungen des Futterkörpers radial gemeinsam bewegbar sind. Neben manuell betätigbaren Handspannfuttern werden in komplexeren Werkzeugmaschinen, insbesondere in programmgesteuerten Drehautomaten, häufig sogenannte Kraftspannfutter eingesetzt, bei denen die von den Spannbacken auf das Werkstück ausgeübten Spannkräfte motorisch oder hydraulisch erzeugt werden.

In Abhängigkeit von der Geometrie des zu spannenden Werkstücks können derartige Spannfutter als Dreibackenfutter oder als Vierbackenfutter ausgebildet sein. Soll beispielsweise ein Werkstück mit einem kreisförmigen oder einem sechseckigen Querschnitt gespannt werden, so wird üblicher Weise ein Dreibackenfutter verwendet, welches drei um jeweils 120° um eine zentrale Futterachse versetzte Backenführungen für Spannbacken aufweist. Dem gegenüber weisen Vierbackenfutter in der Regel vier um jeweils 90° um eine zentrale Futterachse zueinander versetzte Backenführungen auf und sind geeignet, Werkstücke mit einem quadratischen Querschnitt zentriert einzuspannen.

Ein Spannfutter der eingangs genannten Art ist aus der DE 4 016 527 A1 vorbekannt. Dieses besitzt einen Futterkörper, in dessen vorderer Stirnfläche vier paarweise einander gegenüberliegende Führungsnuten ausgebildet sind, wobei sich in den Führungsnuten jeweils eine Spannbacke befindet. Diese ist radial verstellbar in den Führungsnuten gelagert. Ferner umfasst das Spannfutter einen Antrieb, der ausgebildet ist, um die jeweils einander gegenüberliegende Führungsnuten eingesetzte Spannbacken paarweise gemeinsam zu verstellen.

Wenngleich sich die handelsüblichen Spannfutter grundsätzlich bewährt haben, so wird zu Teilen als nachteilig angesehen, dass das Spannen von Werkstücken mit einem rechteckigen, aber nicht quadratischen Querschnitt bei gleichzeitig genauer Zentrierung zur zentralen Futterachse nur mit hohem Aufwand mittels unterschiedlich eingestellter Spannbacken oder unter Verwendung von Adapterstücken möglich ist.

Aufgabe der vorliegenden Erfindung ist somit, ein Spannfutter bereit zu stellen, welches ein einfaches Spannen von Werkstücken mit rechteckigem Querschnitt ermöglicht und die zuvor genannten Nachteile vermeidet.

Gemäß einem ersten Aspekt der Erfindung wird diese Aufgabe gelöst durch ein Spannfutter nach Anspruch 1 mit einem Antrieb, der ausgebildet ist, um in jeweils einander gegenüberliegende Führungsnuten eingesetzte Spannbacken paarweise gemeinsam zu verstellen, wobei der Antrieb jeder Führungsnut zugeordnet eine Keilstange, die in einer im Futterkörper ausgebildeten, sich quer zur Führungsnut erstreckenden Keilstangentasche translatorisch bewegbar geführt ist und an ihrer Vorderseite eine Verzahnung trägt, welche mit einer entsprechenden Gegenverzahnung einer Spannbacke in Eingriff steht oder bringbar ist, um eine Bewegung der Keilstangen in eine radiale Bewegung der Spannbacken umzusetzen, ferner eine Treibringeinheit mit zwei um die zentrale Futterachse drehbar im Futterkörper gelagerten Treibringen zum Antreiben jeweils zwei einander gegenüberliegender Spannbacken, wobei an den Treibringen jeweils ein paar einander gegenüberliegender Keilstangen radial bewegbar und um eine axial verlaufende Drehachse drehbar zu diesen gelagert sind, umfasst, wobei die Verzahnungen der den Treibringen zugeordneten Keilstangenpaare zueinander derart orientiert sind, dass gleichgerichtete Drehbewegungen der Treibringe zu radial gleichgerichteten Bewegungen der Spannbacken führen, und einem um die zentrale Futterachse drehbar im Gehäuse gelagerten Ansteuerelement, welches über einen Koppelmechanismus mit den Treibringen derart gekoppelt ist, dass eine Drehbewegung des Ansteuerelements um die Futterachse zu einer gleichgerichteten Drehbewegung eines Treibrings oder zu gleichgerichteten Drehbewegungen beider Treibringe um die Futterachse führt, und Betätigungsmittel aufweist, welche ausgebildet sind, das Ansteuerelement zu verdrehen, wobei das Ansteuerelement eine scheibenförmige Grundform aufweist und axial mittig zwischen den beiden Treibringen angeordnet ist, wobei der Koppelmechanismus als Mitnehmermechanismus ausgebildet ist, welcher mindestens ein Mitnehmerelement umfasst, das exzentrisch zur Futterachse in dem Ansteuerelement angeordnet ist und mit den beiden Treibringen in Eingriff steht, dadurch, dass das mindestens eine Mitnehmerelement insbesondere als länglicher Bolzen ausgebildet und windschief zur Futterachse kippbar in dem Ansteuerelement gelagert ist.

Diesem Aspekt der Erfindung liegt die grundsätzliche Überlegung zugrunde, ein Vierbackenfutter derart auszugestalten, dass jeweils ein Paar von in einander gegenüberliegende Führungsnuten eingesetzten Spannbacken gemeinsam aufeinander zu oder voneinander weg bewegt wird. Dadurch wird eine exakte Zentrierung des zu spannenden Werkstücks relativ zur Futterachse gewährleistet ist. Ferner sind die beiden Spannbackenpaare miteinander gekoppelt, sodass, wenn ein Spannbackenpaar bereits am zu spannenden Werkstück anliegt, das andere Spannbackenpaar noch radial auf das Werkstück zu bewegbar ist. Somit wird einerseits die Zentrierung eines Werkstücks mit einem rechteckigen Querschnitt und andererseits das Anliegen aller vier Spannbacken an der Außenkontur des Werkstücks im gespannten Zustand sichergestellt, obwohl die Abstände der jeweils einander gegenüberliegenden Spannbacken zueinander verschieden sind.

Das Spannfutter gemäß dem ersten Aspekt der Erfindung besitzt grundsätzlich die Funktionsweise eines Keilstangenfutters. Dies bedeutet, dass eine translatorische Bewegung der Keilstangen quer zur Führungsnut durch die schräg zur Richtung der Führungsnut und zur Bewegungsrichtung der Keilstangen orientierte Verzahnung in eine radiale Bewegung der Spannbacken umgesetzt wird. Die Beweglichkeit der Keilstangen in den Keilstangentaschen ist dabei ohne weiteres dadurch gegeben, dass die Keilstangen radial bewegbar und um eine axial verlaufende Drehachse drehbar zu den Treibringen gelagert sind. Dadurch besitzen sie gegenüber den Treibringen einen hinreichenden Bewegungsfreiheitsgrad, um in den Keilstangentaschen translatorisch verschoben zu werden.

Vorliegend sind die Treibringe und das Ansteuerelement derart gekoppelt, dass beim Spannen eines Werkstücks zunächst beide Treibringe eine zu dem Ansteuerelement gleichgerichtete Drehbewegung ausführen. Dabei können die Treibringe durchaus unterschiedliche Drehgeschwindigkeiten aufweisen. Mit der Drehbewegung der Treibringe geht eine radiale Bewegung aller Spannbacken in Richtung des Werkstücks einher. Die gemeinsame Bewegung der Spannbacken radial nach innen oder radial nach außen wird im Kontext dieser Anmeldung als radial gleichgerichtete Bewegung verstanden. Sobald das erste Paar einander gegenüberliegender Spannbacken am Werkstück anliegt, führt ein weiteres Verdrehen des Ansteuerelements nur noch zur Bewegung des Treibrings, dessen zugeordnete Spannbacken noch nicht am Werkstück anliegen. Dieser Treibring bewegt sich in gleiche Drehrichtung wie das Ansteuerelement weiter, bis auch die beiden diesem zugeordneten Spannbacken am Werkstück in Anlage kommen. Durch diesen Mechanismus ist es möglich, Werkstücke mit einem rechteckigen, aber nicht quadratischen Querschnitt zu spannen und gleichzeitig zu zentrieren, da die Spannbacken jeweils paarweise untereinander gemeinsam, aber die Spannbackenpaare zueinander verschiedenartig bewegt werden können.

Die Spannkraft auf ein zu spannendes Werkstück wird erst dann aufgebracht, wenn sämtliche Spannbacken in Anlage mit dem Werkstück sind.

Gemäß der Erfindung weist das Ansteuerelement eine scheibenförmige Grundform auf und ist axial mittig zwischen den beiden Treibringen angeordnet. Eine derartige, scheibenförmige Ausgestaltung führt zu einer raumsparenden Bauweise des Spannfutters. Durch die axial mittige Anordnung zwischen den beiden Treibringen kann der Koppelmechanismus auf besonders einfache Weise ausgestaltet werden.

Bevorzugt ist das Ansteuerelement ringförmig ausgebildet und weist eine zentrale Durchgangsöffnung auf. Eine derartige zentrale Durchgangsöffnung ermöglicht unter anderem das Spannen von länglichen Bauteilen, die im gespannten Zustand in das Spannfutter hineinragen. Insbesondere wird dadurch die Verwendung des Spannfutters in Verbindung mit einem Stangenlader zum Nachführen von Stangenmaterial ermöglicht.

Der Koppelmechanismus ist erfindungsgemäß als Mitnehmermechanismus ausgebildet sein, welcher mindestens ein Mitnehmerelement umfasst, das exzentrisch zur Futterachse in dem Ansteuerelement angeordnet ist und mit den beiden Treibringen in Eingriff steht. Durch die Anordnung des Ansteuerelements mittig zwischen den Treibringen ist es möglich, den Koppelmechanismus mit mindestens einem Mitnehmerelement zu versehen, welches in dem Ansteuerelement angeordnet ist und axial nach vorne und nach hinten aus diesem vorragt, um mit den beiden Treibringen in Eingriff zu stehen.

Das mindestens eine Mitnehmerelement ist erfindungsgemäß als länglicher Bolzen ausgebildet und windschief zur Futterachse kippbar in dem Ansteuerelement gelagert sein. Eine derartige Ausgestaltung des Mitnehmerelements als länglicher Bolzen ermöglicht eine einfache Bauweise des erfindungsgemäßen Spannfutters. Durch die kippbare Lagerung in dem Ansteuerelement wird erreicht, dass wenn die einem Treibring zugeordneten Spannbacken in Anlage an einem zu spannenden Werkstück sind, eine weitere Bewegung des Ansteuerelements dazu führt, dass der längliche Bolzen, der mit beiden Treibringen in Eingriff steht, windschief zur Futterachse gekippt wird. Das bedeutet, dass der Bolzen in dem Treibring, dessen zugeordnete Spannbacken in Anlage an dem Werkstück sind, einen Ruhepol aufweist und eine weitere Bewegung des Ansteuerelements somit dazu führt, dass sich der andere Treibring weiter in die gleiche Richtung wie das Ansteuerelement bewegt. Aufgrund der Koppelung über den länglichen Bolzen erfolgt dies mit einer höheren Drehgeschwindigkeit als das Ansteuerelement. Unter einem Kippen des länglichen Bolzens windschief zur Futterachse ist dabei zu verstehen, dass das Kippen derart erfolgt, dass sich die Längsachse des Bolzens und die zentrale Futterachse nicht schneiden, insbesondere die Kippbewegung des Mitnehmerelements um eine radial verlaufende Kippachse erfolgt.

Zweckmäßigerweise sind in den beiden Treibringen exzentrisch zur Futterachse angeordnete Bohrungen ausgebildet, in welche das mindestens eine Mitnehmerelement eingreift. In den Treibringen ausgebildete Bohrungen, insbesondere Durchgangsbohrungen, stellen eine einfache Möglichkeit dar, einen Eingriff durch das Mitnehmerelement zu realisieren.

Bevorzugt weist das mindestens eine Mitnehmerelement in seiner Längsrichtung drei Teilabschnitte auf, die jeweils eine konvexe, ballige Außenkontur aufweisen. Die in den Treibringen angeordneten Bohrungen sind bevorzugt als zylindrische Bohrungen ausgebildet. Mit anderen Worten weist das mindestens eine Mitnehmerelement eine Unterteilung in drei Längsabschnitte auf, die jeweils eine ballige, konvexe Außenform besitzen. Dadurch wird ein einfaches Kippen in den idealerweise zylindrisch ausgebildeten Bohrungen ermöglicht, so dass beim Kippen der Mitnehmerelemente keine Schleifbewegung dieser über die Wandung der Bohrungen stattfindet, sondern lediglich eine Abrollbewegung. Dadurch wird der Verschleiß eines erfindungsgemäßen Spannfutters erheblich reduziert.

In besonders bevorzugter Ausgestaltung umfasst der Koppelmechanismus genau vier Mitnehmerelemente, die bevorzugt in einem gleichen Abstand zur zentralen Futterachse gleichmäßig entlang des Umfangs angeordnet sind. Durch die Anordnung mehrerer, insbesondere von insgesamt vier Mitnehmerelementen entlang des Umfangs wird eine gleichmäßige, symmetrische Kraftübertragung zwischen dem Ansteuerelement und den Treibringen ermöglicht. Das Risiko eines Verkantens wird durch eine solche Anordnung erheblich minimiert.

In weiterer Ausgestaltung umfassen die Betätigungsmittel eine Gewindespindel, welche drehbar gelagert in einem zur radialen Außenfläche des offenen länglichen Aufnahmeraum des Futterkörpers angeordnet ist. Eine Gewindespindel stellt eine einfache Möglichkeit dar, eine rotatorische Bewegung dieser in eine translatorische Bewegung umzusetzen. Durch den zu einer radialen Außenfläche hin offenen länglichen Aufnahmeraum besteht die Möglichkeit, manuell oder maschinell von außen die Gewindespindel zu verdrehen, um das Ansteuerelement zu verdrehen und ein Werkstück zu spannen oder freizugeben. Hierzu kann die Gewindespindel von außen zugängliche geeignete Eingriffsmittel, beispielsweise eine Sechskant- oder Vierkantkontur besitzen.

Bevorzugt steht die Gewindespindel mit einer Spindelmutter in Eingriff. Diese ist mit einem Gleitstein, welcher an dem Ansteuerelement in radialer Richtung beweglich gelagert ist, drehbar um eine axial verlaufende Drehachse verbunden, um eine translatorische Bewegung der Spindelmutter in eine Drehbewegung des Ansteuerelements umzusetzen. Die radiale Beweglichkeit der Gleitsteine relativ zu dem Ansteuerelement ist erforderlich, da bei einem Verdrehen des Ansteuerelements die Spindelmutter an der Gewindespindel translatorisch bewegbar geführt ist und sich dabei deren radiale Lage zum Ansteuerelement verändert. In an sich bekannter Weise kann die Drehbarkeit beispielsweise durch eine Drehbolzenverbindung zwischen Gleitstein und Spindelmutter realisiert werden.

Gemäß einem zweiten Aspekt der Erfindung wird die Aufgabe gelöst durch ein Spannfutter nach Anspruch 6 mit einem Antrieb, der ausgebildet ist, um in jeweils einander gegenüberliegende Führungsnuten eingesetzte Spannbacken paarweise gemeinsam zu verstellen, wobei der Antrieb jeder Führungsnut zugeordnet eine Keilstange aufweist, die in einer im Grundkörper ausgebildeten, sich quer zur Führungsnut ersteckenden Keilstangentasche translatorisch bewegbar geführt ist und an ihrer Vorderseite eine Verzahnung trägt, welche mit einer entsprechenden Gegenverzahnung einer Spannbacke in Eingriff steht oder bringbar ist, um eine Bewegung der Keilstangen in eine radiale Bewegung der Spannbacken umzusetzen, und ferner eine Treibringeinheit mit zwei um die zentrale Futterachse drehbar im Futterkörper gelagerten Treibringen zum Antreiben jeweils zweier einander gegenüberliegender Spannbacken, wobei an den Treibringen jeweils ein Paar einander gegenüberliegender Keilstangen radial bewegbar und um eine axial verlaufende Drehachse drehbar zu diesem gelagert sind, umfasst, wobei die Verzahnungen der den Treibringen zugeordneten Keilstangenpaare zueinander derart orientiert sind, dass entgegengesetzte Drehbewegungen der Treibringe zu einer radial gleichgerichteten Bewegung der Spannbacken führen, und Betätigungsmittel aufweist, welche ausgebildet sind, die beiden Treibringe relativ zueinander zu verdrehen.

Diesem Aspekt der Erfindung liegt ebenfalls die grundsätzliche Überlegung zugrunde, ein Vierbackenfutter derart auszugestalten, dass jeweils ein Paar von in einander gegenüberliegende Führungsnuten eingesetzten Spannbacken gemeinsam aufeinander zu oder voneinander weg bewegt wird. Dadurch wird eine exakte Zentrierung des zu spannenden Werkstücks relativ zur Futterachse gewährleistet ist. Ferner sind die beiden Spannbackenpaare miteinander gekoppelt, sodass, wenn ein Spannbackenpaar bereits am zu spannenden Werkstück anliegt, das andere Spannbackenpaar noch radial auf das Werkstück zu bewegbar ist. Somit wird einerseits die Zentrierung eines Werkstücks mit einem rechteckigen Querschnitt und andererseits das Anliegen aller vier Spannbacken an der Außenkontur des Werkstücks im gespannten Zustand sichergestellt, obwohl die Abstände der jeweils einander gegenüberliegenden Spannbacken zueinander verschieden sind.

Das Spannfutter gemäß dem zweiten Aspekt der Erfindung besitzt grundsätzlich die Funktionsweise eines Keilstangenfutters. Dies bedeutet, dass eine translatorische Bewegung der Keilstangen quer zur Führungsnut durch die schräg zur Richtung der Führungsnut und zur Bewegungsrichtung der Keilstangen orientierte Verzahnung in eine radiale Bewegung der Spannbacken umgesetzt wird. Die Beweglichkeit der Keilstangen in den Keilstangentaschen ist dabei ohne weiteres dadurch gegeben, dass die Keilstangen radial bewegbar und um eine axial verlaufende Drehachse drehbar zu den Treibringen gelagert sind. Dadurch besitzen sie gegenüber den Treibringen einen hinreichenden Bewegungsfreiheitsgrad, um in den Keilstangentaschen translatorisch verschoben zu werden.

Vorliegend sind die Treibringe relativ zu dem Futterkörper grundsätzlich schwimmend gelagert, was bedeutet, dass beim Spannen eines Werkstücks zunächst eine unbestimmte Bewegung der Spannbackenpaare zueinander ausgeführt wird. Da die Treibringe durch die Betätigungsmittel nur relativ zueinander verstellt werden, ist nicht definiert, ob sich die Spannbackenpaare synchron zueinander bewegen oder mit unterschiedlichen Geschwindigkeiten oder sogar mit entgegengesetzten radialen Bewegungsrichtungen. Erst wenn das erste Paar einander gegenüberliegender Spannbacken am Werkstück anliegt, liegt eine eindeutig definierte Bewegung vor. Ein weiteres Verdrehen der Treibringe relativ zueinander führt dazu, dass sich nur noch der Treibring, dessen zugeordnete Spannbacken noch nicht am Werkstück anliegen, absolut weiter bewegt und somit die beiden diesem zugeordneten Spannbacken eine zum Werkstück hin gerichtete Bewegung durchführen, bis auch dieses Spannbackenpaar mit dem Werkstück in Anlage kommt. Durch diesen Mechanismus ist es möglich, Werkstücke mit einem rechteckigen, aber nicht quadratischen Querschnitt zu spannen und gleichzeitig zu zentrieren, da die Spannbacken jeweils paarweise untereinander gemeinsam, aber die Spannbackenpaare zueinander verschiedenartig bewegt werden können.

Die schwimmende Lagerung der Treibringe relativ zum Futterkörper führt ferner dazu, dass die Spannkraft auf ein zu spannendes Werkstück erst dann aufgebracht wird, wenn sämtliche Spannbacken in Anlage mit dem Werkstück sind.

In weiterer Ausgestaltung der Erfindung umfassen die Betätigungsmittel eine Gewindespindel, welche in einem zur radialen Außenfläche offenen länglichen Aufnahmeraum des Futterkörpers angeordnet ist. Eine Gewindespindel stellt eine einfache Möglichkeit dar, eine rotatorische Bewegung der Gewindespindel in eine translatorische Bewegung einer auf dieser gehaltenen Spindelmutter umzusetzen.

Die Gewindespindel kann in ihrer Längsrichtung zwei Gewindeabschnitte mit zueinander entgegengesetzt verlaufenden Gewindesteigungen zum Anlenken jeweils eines Treibrings aufweisen, um eine Drehbewegung der Gewindespindel in entgegengesetzte Drehbewegungen der beiden Treibringe umzusetzen. Mit anderen Worten ist vorgesehen, durch die Drehbewegung der Gewindespindel eine entgegengesetzte Drehbewegung der Treibringe zu erzeugen, indem die Gewindespindel zwei Gewindeabschnitte mit entgegengesetzten Gewindesteigungen aufweist. Das bedeutet, dass ein Gewindeabschnitt mit einem Linksgewinde und der andere Gewindeabschnitt mit einem Rechtsgewinde versehen sind. Jeder Gewindeabschnitt dient dabei zum Anlenken eines Treibrings, sodass beim Drehen der Gewindespindel die Treibringe in entgegengesetzte Drehrichtungen angelenkt werden.

Dazu kann an jedem der beiden Treibringe eine mit der Gewindespindel in Eingriff stehende Spindelmutter angeordnet sein, die mit einem an dem jeweiligen Treibring in radialer Richtung beweglich gelagerten Gleitstein drehbar um eine axial verlaufende Drehachse verbunden ist, um eine translatorische Bewegung der jeweiligen Spindelmutter in eine Drehbewegung des korrespondierenden Treibrings umzusetzen. Um beim Drehen der Gewindespindel ein Blockieren zu vermeiden, sind derartige Freiheitsgrade der Spindelmuttern relativ zum jeweiligen Treibring erforderlich. Des Weiteren müssen die Spindelmuttern derart an die Gewindespindel angepasst sein, dass - wenn ein Paar einander gegenüberliegender Spannbacken am Werkstück bereits anliegt - eine weitere Drehbewegung der Gewindespindel ohne weitere translatorische Bewegung der Spindelmutter möglich sein muss.

In weiterer Ausgestaltung dieser Ausführungsform weist die Gewindespindel in ihrer Längsrichtung zwischen den beiden Gewindeabschnitten einen mittleren Lagerungsabschnitt mit einem kreisförmigen Querschnitt auf, der in einer korrespondierenden Führungsbohrung des Futterkörpers gleitend in Längsrichtung der Gewindespindel und drehbar um ihre Längsachse gelagert ist. Eine derartige gleitende Lagerung in Längsrichtung ist erforderlich, da beim Anliegen eines Paars einander gegenüberliegender Spannbacken am Werkstück eine weitere Drehbewegung der Spindel notwendig ist, um auch das andere Paar einander gegenüberliegender Spannbacken am Werkstück in Anlage zu bringen. Dabei findet eine weitere Drehbewegung der Gewindespindel statt, welche jedoch mit einer gleichzeitigen translatorischen Bewegung einher geht, da eine der beiden Spindelmuttern aufgrund der beiden bereits am Werkstück anliegenden Spannbacken nicht mehr weiter bewegbar ist. Somit muss die Gewindespindel in ihrer Längsrichtung gleitend gelagert sein.

Vorzugsweise ist die Führungsbohrung in einem den Aufnahmeraum des Futterkörpers quer, insbesondere senkrecht zur Längsrichtung der Gewindespindel durchsetzenden Steg ausgebildet. Ein solcher Steg kann als separates Bauteil ausgebildet sein und in eine korrespondierende, im Futterkörper ausgebildete Ausnehmung eingesetzt werden, um ein einfaches und schnelles Montieren oder Wechseln der Gewindespindel zu ermöglichen. Der Steg kann dabei auch mehrteilig ausgebildet sein.

Ferner können an der Gewindespindel Anschlagmittel ausgebildet sein, mittels derer die Beweglichkeit der Gewindespindel in ihrer Längsrichtung begrenzt ist. Konkret können die Anschlagmittel als an den Lagerungsabschnitt angrenzende Anschlagflächen ausgebildet sein, durch deren Anlage an den Steg die Beweglichkeit der Gewindespindel in ihrer Längsrichtung begrenzt ist. Eine Begrenzung der Beweglichkeit der Gewindespindel in ihrer Längsrichtung ist erforderlich, da sich die beiden Treibringe nur in einem bestimmten Bereich bewegen lassen sollen. An den Lagerungsabschnitt angrenzende Anschlagflächen, die stirnseitig an dem Steg in Anlage kommen können, stellen dabei eine einfache Möglichkeit dar, die Beweglichkeit der Gewindespindel in Richtung ihrer Längsachse zu begrenzen.

Durch den zu einer radialen Außenfläche hin offenen länglichen Aufnahmeraum besteht die Möglichkeit, manuell oder maschinell von außen die Gewindespindel zu verdrehen. Hierzu kann die Gewindespindel von außen zugängliche geeignete Eingriffsmittel, beispielsweise eine Sechskant- oder Vierkantkontur besitzen.

In weiterer Ausgestaltung der Spannfutter gemäß dem ersten und zweiten Aspekt der Erfindung weist jeder Treibring einen inneren ringförmigen, insbesondere kreisringförmigen Abschnitt und zwei von diesem radial nach außen vorstehende, einander zur Futterachse gegenüberliegende Vorsprünge zur Lagerung der Keilstangen auf. Dadurch wird eine platzsparende Unterbringung der beiden Treibringe im Futterkörper ermöglicht, da die Treibringe nur im Bereich der Vorsprünge einen großen Außendurchmesser aufweisen und der innere ringförmige Abschnitt materialsparend gefertigt werden kann.

In weiterer Ausgestaltung beider Aspekte können die Treibringe im inneren ringförmigen Abschnitt gegenüber dem jeweiligen Vorsprung axial verjüngt ausgebildet sein, sodass die Vorsprünge der beiden Treibringe in axialer Richtung bündig zueinander angeordnet sind. Dieser Ausgestaltung liegt die Überlegung zugrunde, die beiden Treibringe platzsparend ineinander zu positionieren, sodass lediglich die Vorsprünge radial außenseitig vorragen und diese dabei axial bündig zueinander angeordnet sind. Dabei sind die inneren ringförmigen Abschnitte vorzugsweise axial übereinander angeordnet.

In den vorderen Stirnflächen der Vorsprünge können sich radial erstreckende Nuten ausgebildet sein, in welchen radial zu den Treibringen bewegbare Gleitsteine angeordnet sind, in denen die Keilstangen um eine axial verlaufende Drehachse drehbar gelagert sind. Konkret wird dadurch die radiale Beweglichkeit und die Drehbarkeit der Keilstangen relativ zu den Treibringen realisiert. Die radiale Beweglichkeit der Keilstangen relativ zu dem jeweiligen Treibring ist erforderlich, da bei einem Verdrehen der Treibringe die jeweiligen Keilstangen in einer Keilstangentasche translatorisch bewegbar geführt sind und sich dabei die radiale Lage der Keilstangen zum Treibring verändert. Die in den Nuten angeordneten Gleitsteine bilden dabei eine präzise und reibungsarme Führung der Keilstangen relativ zu dem jeweiligen Treibring in radialer Richtung. Des Weiteren ist eine Drehbarkeit erforderlich, da sich auch die Winkellage der Keilstangen relativ zum jeweiligen Treibring verändert. Die Drehbarkeit kann beispielswiese durch eine Drehbolzenverbindung zwischen den Keilstangen und den Gleitsteinen realisiert werden. Insgesamt ist es für eine einwandfreie Funktionsweise erforderlich, die Keilstangen drehbar und radial verschiebbar in den Treibringen zu lagern und bei der Bewegung der Keilstange relativ zu den Treibringen die auftretenden Reibungskräfte möglichst gering zu halten.

Alternativ kann in den Vorsprüngen der Treibringe ein Führungselement angeordnet sein, welches um eine sich axial erstreckende Drehachse drehbar im jeweiligen Treibring gelagert ist. In dem Führungselement kann eine Nut ausgebildet sein, in welcher die zugehörige Keilstange translatorisch gleitend gelagert ist. Auf diese Art wird ebenfalls eine radiale Beweglichkeit und Drehbarkeit der Keilstangen relativ zu dem jeweiligen Treibring erreicht.

In an sich bekannter Weise können die Keilstangen eine quaderförmige Grundform aufweisen. Derartige Keilstangen sind leicht herzustellen und ermöglichen einen platzsparenden Einbau in eine entsprechende Keilstangentasche.

Die Keilstangentaschen können sich senkrecht zur Richtung der jeweiligen Führungsnuten erstrecken.

Zweckmäßigerweise sind die Führungsnuten rechtwinklig zueinander angeordnet. Eine derartige Anordnung ist sinnvoll zum Spannen von Werkstücken mit einem rechteckigen Querschnitt, da die Führungsnuten auf diese Weise senkrecht zur Außenkontur eines zu spannenden Werkstücks orientiert sind.

In an sich bekannter Weise kann das Spannfutter als Handspannfutter ausgebildet sein. Dazu kann die Gewindespindel eine von außen zugängliche Eingriffskontur aufweisen, aus welcher ein entsprechendes Eingriffsmittel zur Betätigung aufgesetzt werden kann. Die Eingriffskontur kann beispielsweise in bekannter Weise als Sechskantkontur oder als Vierkantkontur ausgebildet sein.

Der Futterkörper kann zur Vereinfachung der Montage zweiteilig ausgebildet sein und einen vorderen und einen hinteren Futterkörperabschnitt umfassen.

In weiterer Ausgestaltung der Erfindung gemäß dem ersten und zweiten Aspekt ist in jeder Führungsnut eine Grundbacke zum Anbringen einer Aufsatzbacke angeordnet, die eine mit der Verzahnung der Keilstange in Eingriff stehende Gegenverzahnung aufweist. Die Grundbacken können einen axial über die vordere Stirnfläche des Futterkörpers vorragenden Vorsprung aufweisen, der kragenartig den zwischen den Grundbacken und den Führungsnuten radial nach innen und seitlich zu den Führungsnuten ausgebildeten Spalt überdeckt, um einem Eindringen von Schmutz und Flüssigkeiten in die Führungsnuten entgegen zu wirken.

In an sich bekannter Weise können die Grundbacken Befestigungsmittel zum lösbaren Befestigen von Aufsatzbacken aufweisen. In den Grundbacken können beispielsweise Nuten angeordnet sein, die sich radial erstrecken und mittels derer Aufsatzbacken über einen in jeder Nut angeordneten Nutenstein verspannt werden können.

Ferner können die Grundbacken in ihrer vorderen Stirnseite Formschlusselemente zum Übertragen einer Spannkraft aufweisen, die mit korrespondierenden Gegenelementen von Aufsatzbacken in Eingriff bringbar sind. Bei den Formschlusselementen kann es sich um eine Verzahnung handeln. Durch eine derartige Verzahnung wird nicht nur eine Übertragung der Spannkraft von den Grundbacken auf die Aufsatzbacken realisiert, sondern auch ein relativ zur Futterachse symmetrisches Anbringen der Aufsatzbacken an den Grundbacken vereinfacht.

Für die weitere Ausgestaltung der Erfindung wird auf die Unteransprüche, sowie auf das nachfolgend beschriebene Ausführungsbeispiel unter Bezugnahme auf die Zeichnung verwiesen.

In der Zeichnung zeigen:
- Figur 1: ein Spannfutter gemäß dem ersten Aspekt der vorliegenden Erfindung teilweise geschnitten in perspektivischer Ansicht;
- Figur 2: das Spannfutter aus Figur 1 in einer anders geschnittenen perspektivischen Ansicht;
- Figur 3: eine Teildarstellung des Spannfutters in Figur 1 in perspektivischer Ansicht;
- Figur 4: eine weitere Teildarstellung des Spannfutters aus Figur 1 in perspektivischer Ansicht;
- Figur 5: eine Teildarstellung des Spannfutters aus Figur 1 in perspektivischer Ansicht in einer ersten Spannbackenstellung;
- Figur 6: eine Teildarstellung des Spannfutters aus Figur 1 in perspektivischer Ansicht in einer zweiten Spannbackenstellung;
- Figur 7: eine Teildarstellung des Spannfutters aus Figur 1 in perspektivischer Ansicht in einer dritten Spannbackenstellung;
- Figur 8: ein Spannfutter gemäß dem zweiten Aspekt der vorliegenden Erfindung teilweise geschnitten in perspektivischer Ansicht;
- Figur 9: eine Teildarstellung des Spannfutters aus Figur 8 in perspektivischer Ansicht;
- Figur 10: eine Teildarstellung des Spannfutters aus Figur 8 in Draufsicht;
- Figur 11: eine Teildarstellung des Spannfutters aus Figur 8 in Draufsicht in einer ersten Spannbackenstellung;
- Figur 12: eine Teildarstellung des Spannfutters aus Figur 8 in Draufsicht in einer zweiten Spannbackenstellung;
- Figur 13: eine Teildarstellung des Spannfutters aus Figur 8 in Draufsicht in einer dritten Spannbackenstellung.

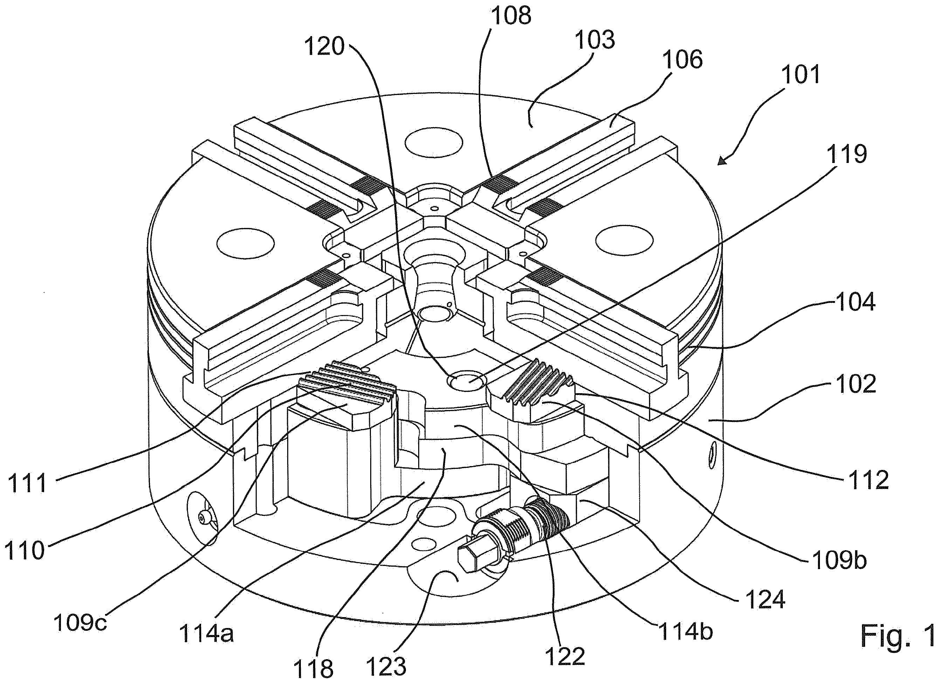

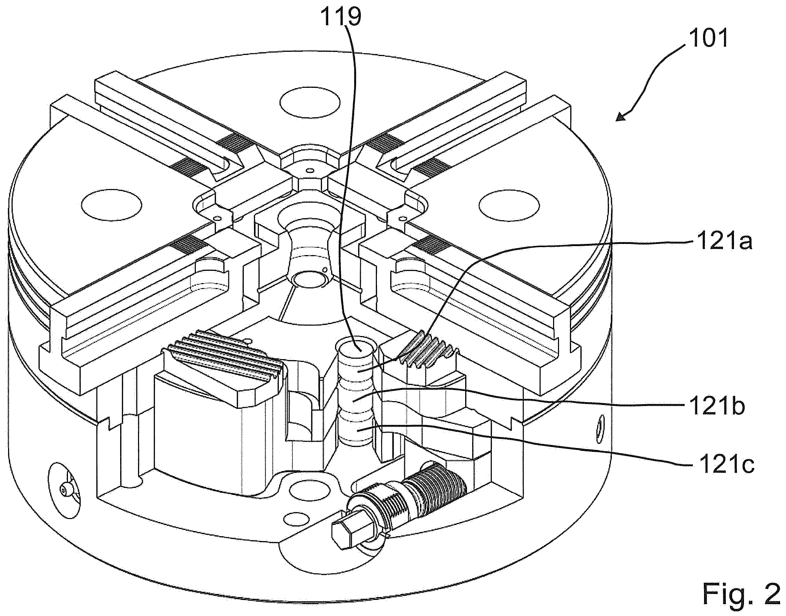

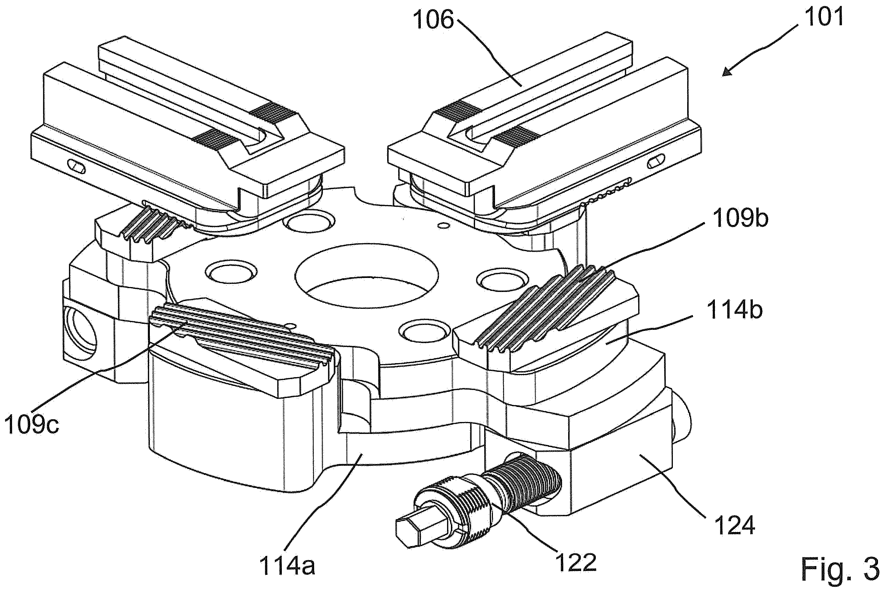

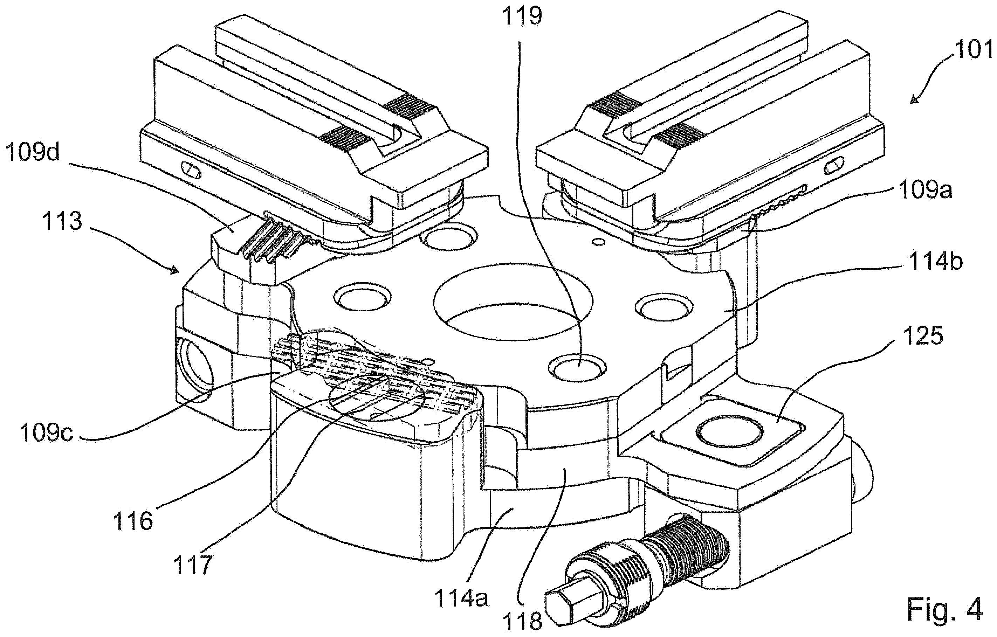

Die Figuren 1 bis 4 zeigen ein Ausführungsbeispiel eines Spannfutters 101 für Drehmaschinen gemäß dem ersten Aspekt der vorliegenden Erfindung. Dieses besitzt einen zweiteilig ausgebildeten Futterkörper 102, in dessen vorderer Stirnfläche 103 vier sich radial zu einer zentralen Futterachse X erstreckende Führungsnuten 104 ausgebildet sind. Diese sind paarweise einander gegenüberliegend und rechtwinklig zueinander ausgerichtet.

In den Führungsnuten 104 ist jeweils eine Spannbacke 105a, 105b, 105c, 105d angeordnet, welche sich aus einer Grundbacke 106 und einer in den Figuren 1 bis 3 nicht dargestellten Aussatzbacke 107 zusammensetzt. Zur lösbaren Befestigung der Aufsatzbacken 107 an den Grundbacken 106 sind in den Grundbacken 6 Befestigungsnuten ausgebildet, in welche ein Nutenstein eingesetzt ist, mit welchem die Aufsatzbacken 107 verschraubt werden können. Des Weiteren besitzen die Grundbacken 106 in ihrer vorderen Stirnseite jeweils eine Verzahnung 108, welche mit einer korrespondierenden Gegenverzahnung der jeweiligen Aufsatzbacke 107 formschlüssig in Eingriff steht, um eine Spannkraft übertragen und die Aufsatzbacken 107 an den Grundbacken 106 positionieren zu können.

Das Spannfutter 101 umfasst ferner einen Antrieb, der ausgebildet ist, um die einander zugeordneten Paare von Spannbacken 105a, 105c; 105b, 105d jeweils gemeinsam zu verstellen. Dazu umfasst der Antrieb jeder Führungsnut 104 zugeordnet eine Keilstange 109a, 109b, 109c, 109d, welche vorderseitig eine Verzahnung 110 trägt, die mit einer entsprechenden Gegenverzahnung 111 der korrespondierenden Grundbacke 106 in Eingriff steht. Die Keilstangen 109a, 109b, 109c, 109d weisen eine quaderförmige Grundform auf und sind in im Futterkörper 102 ausgebildeten, sich senkrecht zur jeweiligen Führungsnut 104 ersteckenden Keilstangentaschen 112 translatorisch bewegbar geführt. Die Verzahnung 110 der Keilstangen 109a, 109b, 109c, 109d ist dabei schräg zur Richtung der Führungsnut 104 und zur Richtung der Keilstangentaschen 112 orientiert, um eine Bewegung der Keilstangen 109a, 109b, 109c, 109d in eine radiale Bewegung der Spannbacken 105a, 105b, 105c, 105d umzusetzen.

Der Antrieb umfasst ferner eine Treibringeinheit 113 mit zwei um die zentrale Futterachse X drehbar im Futterkörper 102 gelagerten Treibringen 114a, 114b zum Antreiben jeweils zweier einander gegenüberliegender Spannbacken 105a, 105c; 105b, 105d. Jeder der beiden Treibringe 114a, 114b besitzt einen inneren kreisringförmigen Abschnitt und zwei von diesem radial nach außen vorstehende, einander zur Futterachse gegenüberliegende Vorsprünge 115. Die inneren ringförmigen Abschnitte der beiden Treibringe 114a, 114b sind dabei gegenüber den Vorsprüngen 115 verjüngt ausgebildet und übereinander positioniert, womit erreicht wird, dass die Vorsprünge 115 der beiden Treibringe 114a, 114b in axialer Richtung bündig zueinander angeordnet sind.

In den Vorsprüngen 115 der beiden Treibringe 114a, 114b ist jeweils ein Führungselement 116 angeordnet, welches parallel zur Futterachse X drehbar in den Treibringen gelagert ist. Jedes Führungselement 116 weist eine Nut 117 auf, in welcher die zugeordnete Keilstange 109a, 109b, 109c, 109d gleitend gelagert ist. Dadurch ist gewährleistet, dass die Keilstangen 109a, 109b, 109c, 109d relativ zu den jeweiligen Treibringen 114a, 114b radial bewegbar und drehbar zu diesen gelagert sind und somit in den Keilstangentaschen 112 translatorisch bewegbar sind.

Dabei sind die Verzahnungen 108 der den Treibringen 114a, 114b zugeordneten Keilstangenpaaren 109a, 109c; 109b, 109d zueinander derart orientiert, dass gleichgerichtete Drehbewegungen der Treibringe 114a, 114b zu einer radial gleichgerichteten Bewegung der Spannbackenpaare 105a, 105c; 105b, 105d führen.

Die Treibringeinheit 113 umfasst ferner ein Ansteuerelement 118, welches eine scheibenförmige Grundform aufweist und axial mittig zwischen den beiden Treibringen 114a, 114b angeordnet ist. Das Ansteuerelement 118 ist um die zentrale Futterachse X im Futterkörper gelagert und über einen Koppelmechanismus mit den Treibringen 114a, 114b derart gekoppelt, dass eine Drehbewegung des Ansteuerelements 118 um die Futterachse X zu einer gleichgerichteten Drehbewegung eines Treibrings 114a, 114b oder zu gleichgerichteten Drehbewegungen beider Treibringe 114a, 114b um die Futterachse X führt.

Der Koppelmechanismus umfasst insgesamt vier in einem gleichen Abstand von der zentralen Futterachse X und gleichmäßig entlang des Umfangs angeordnete Mitnehmerelemente 119, die als längliche Bolzen ausgebildet sind und windschief zur Futterachse X kippbar in dem Ansteuerelement gelagert sind. Die Mitnehmerelemente 119 stehen mit den beiden Treibringen 114a, 114b in Eingriff, indem diese in in den beiden Treibringen 114a, 114b exzentrisch zur Futterachse X angeordnete Bohrungen 120 eingreifen. Konkret weist jedes Mitnehmerelement 119 in seiner Längsrichtung drei Teilabschnitte 121a, 121b, 121c auf, die jeweils eine konvexe, ballige Außenkontur 121 aufweisen. Der mittlere Teilabschnitt 121b ist dabei axial in dem Ansteuerelement 118 angeordnet, wohingegen der axial vordere Teilabschnitt 121a und der axial hintere Teilabschnitt 121c jeweils in einen der beiden Treibringe 114a, 114b eingreifen.

Der Antrieb weist ferner Betätigungsmittel auf, welche ausgebildet sind, das Ansteuerelement 118 zu verdrehen. Konkret umfassen diese eine Gewindespindel 122, welche in einem zur radialen Außenfläche länglichen Aufnahmeraum 123 des Futterkörpers 102 angeordnet ist. Die Gewindespindel 122 dient dem Anlenken des Ansteuerelements 118, um eine Drehbewegung der Gewindespindel 122 in eine Drehbewegung des Ansteuerelements 118 umzusetzen. Dazu ist an dem Ansteuerelement 118 eine mit der Gewindespindel 122 in Eingriff stehende Spindelmutter 124 angeordnet. Diese ist mit einem an dem Ansteuerelement 118 in radialer Richtung beweglich gelagerten Gleitstein 125 drehbar um eine axial verlaufende Drehachse verbunden, um eine translatorische Bewegung der Spindelmutter 124 in eine Drehbewegung des Ansteuerelements 118 umzusetzen.

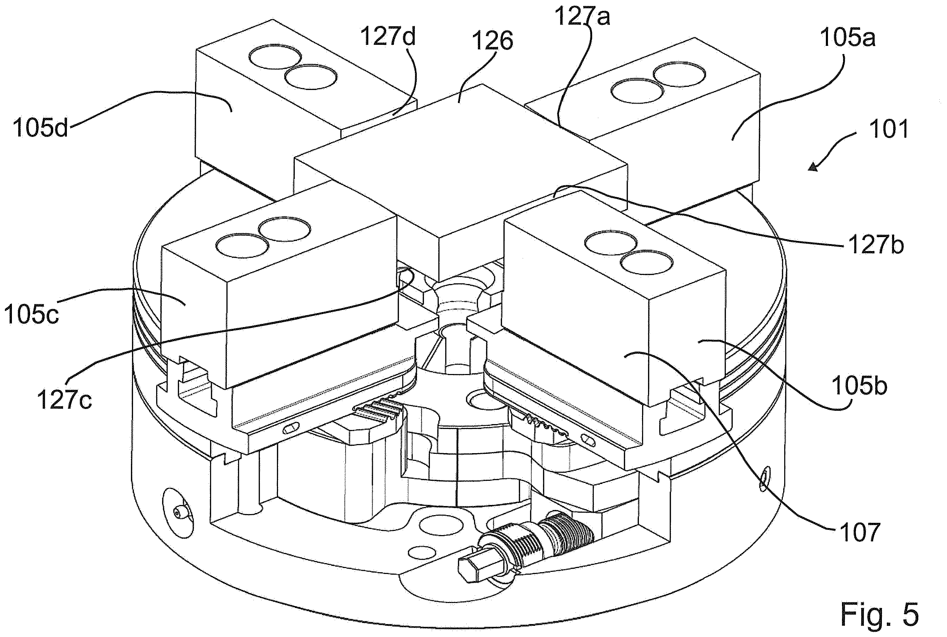

In den Figuren 5 bis 7 ist das Spannfutter 101 gemäß dem ersten Aspekt der Erfindung mit verschiedenen Spannbackenstellungen dargestellt. Ferner ist in den Figuren 5 bis 7 ein zu spannendes Werkstück 126 abgebildet, welches eine rechteckige, nicht quadratische Außenkontur aufweist. An den Spannbacken 105a, 105b, 105c ,105d sind dabei Spannflächen 127a, 127b, 127c, 127d ausgebildet, die zur Anlage an dem Werkstück 126 vorgesehen sind.

In Figur 5 ist erkennbar, dass sich keine der Spannflächen 127a in Anlage an dem Werkstück 126 befindet. Dieses kann somit in dieser Stellung der Spannbacken 105a, 105b, 105c, 105d in das Spannfutter 101 eingesetzt werden.

Soll das eingesetzte Werkstück 126 gespannt werden, so wird durch Drehen der Gewindespindel 122 das Ansteuerelement verdreht. Durch die mit den beiden Treibringen 114a, 114b in Eingriff stehenden Mitnehmerelemente 119 geht die Drehbewegung des Ansteuerelements 118 mit gleichgerichteten Drehbewegungen beider Treibringe 114a, 114b einher. Die exakte Bewegung der beiden Treibringe 114a, 114b relativ zum Futterkörper ist dabei zunächst nicht definiert, da ein Kippen der Mitnehmerelemente 119 kinematisch möglich ist, sodass sich die beiden Treibringe 114a, 114b mit unterschiedlichen Drehgeschwindigkeiten bewegen können. Durch die symmetrische Bewegung der jeweils einander gegenüberliegenden Spannbackenpaare 105a, 105c; 105b, 105d wird in beide senkrecht zueinander orientierten Richtungen der Führungsnuten 104 eine Zentrierung des Werkstücks 126 zur Futterachse X gewährleistet.

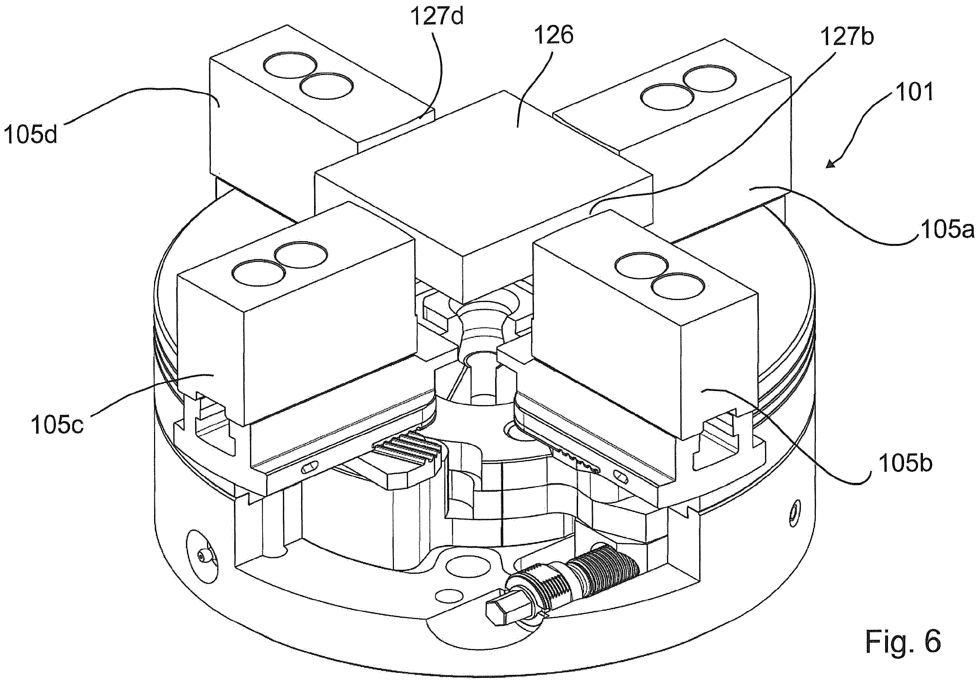

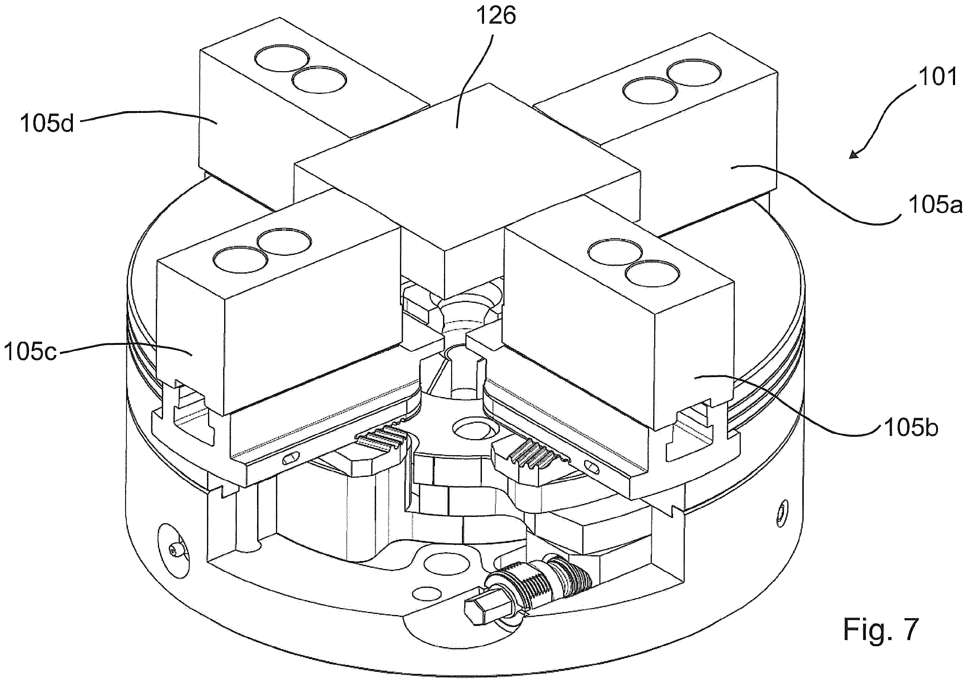

In Figur 6 ist zu erkennen, dass das erste Spannbackenpaar 105a, 105c mit der Außenkontur des Werkstücks 126 in Anlage ist. Ausgehend von dieser Stellung der Spannbacken 105a, 105b, 105c, 105d führt eine weitere Drehung der Gewindespindel 127 ebenfalls zu einer weiteren Drehbewegung des Ansteuerelements 118. Der hintere Treibring 114 b dreht sich dabei nicht weiter, da die ihm zugeordneten Spannbacken 105a, 105c an dem Werkstück anliegen. Die Mitnehmerelemente 119 werden somit durch die weitere Drehbewegung des Ansteuerelements 118 windschief zur Futterachse X gekippt, wobei der in dem hinteren Treibring 114b angeordnete Längsabschnitt 121c der Mitnehmerelemente 119 einen Ruhepol der Kippbewegung bildet. Somit dreht sich beim weiteren Drehen des Ansteuerelements 118 lediglich der axial vordere Treibring 114a weiter, was bewirkt, dass sich das zweite Spannbackenpaar 105b, 105d weiter auf das Werkstück zubewegt, bis auch dieses Spannbackenpaar 105b, 105d an der Außenkontur des Werkstücks 126 in Anlage kommt, wie dies in Figur 7 dargestellt ist.

Sobald sämtliche Spannbacken 105a, 105b, 105c, 105d an der Außenkontur des Werkstücks 126 anliegen, wird die Spannkraft aufgebracht. Durch den vorliegenden Mechanismus wird es ermöglicht, ein Werkstück 126 mit einem rechteckigen und nicht quadratischen Querschnitt auf einfache Weise zu spannen und dabei durch die symmetrische Bewegung zur Futterachse x der jeweils einander gegenüberliegenden Spannbacken 105a, 105c; 105b, 105d relativ zu der Futterachse X eine präzise Zentrierung zu gewährleisten.

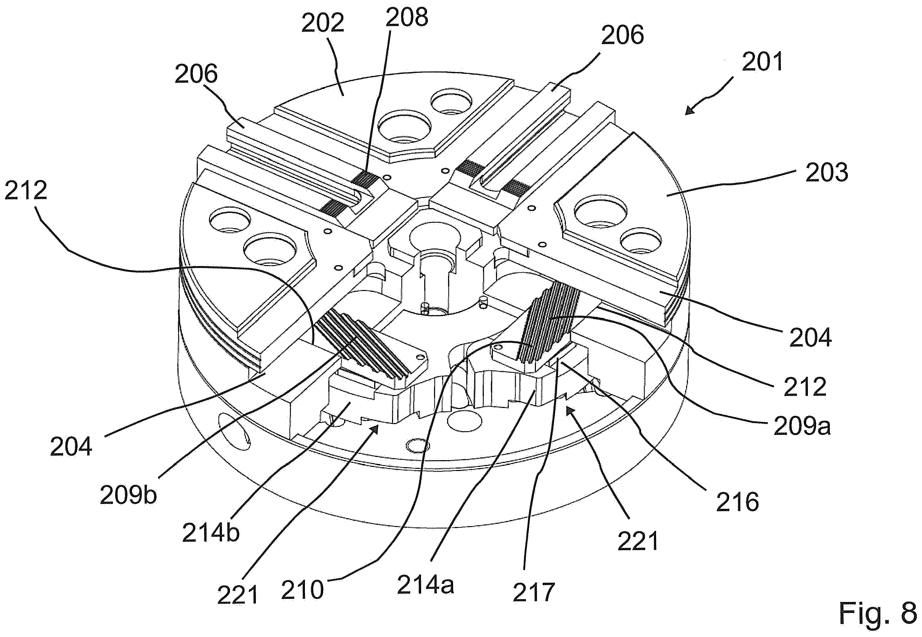

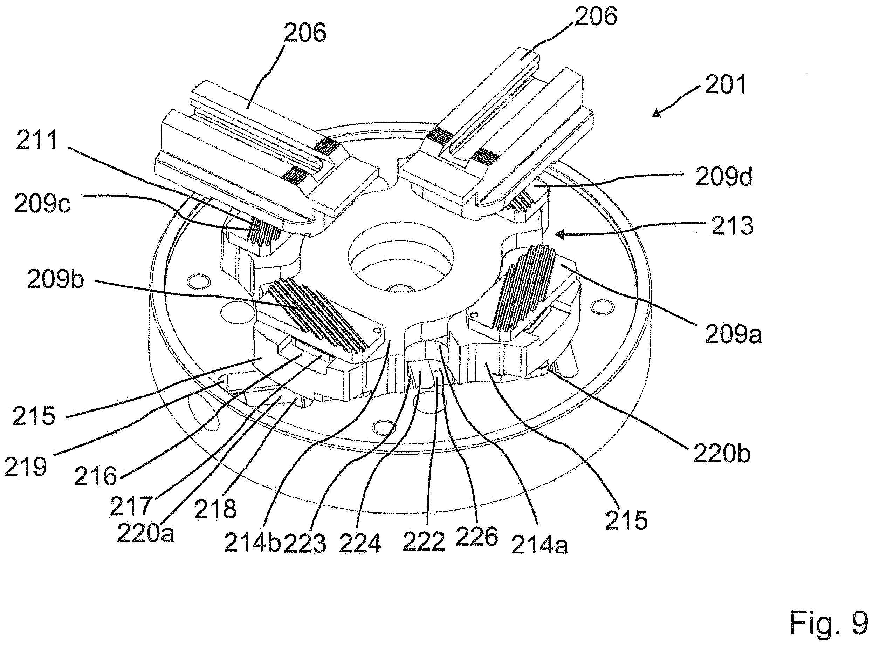

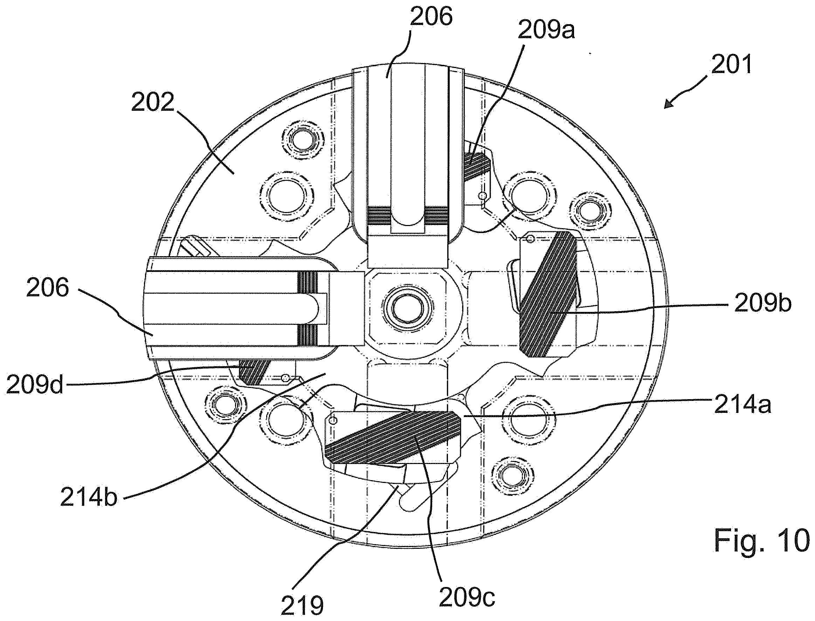

Die Figuren 8 bis 10 zeigen ein Ausführungsbeispiel eines Spannfutters 201 für Drehmaschinen gemäß dem zweiten Aspekt der vorliegenden Erfindung. Dieses besitzt einen zweiteilig ausgebildeten Futterkörper 202, in dessen vorderer Stirnfläche 203 vier sich radial zu einer zentralen Futterachse X erstreckende Führungsnuten 204 ausgebildet sind. Diese sind paarweise einander gegenüberliegend und rechtwinklig zueinander ausgerichtet.

Dabei sind die Verzahnungen 208 der den Treibringen 214a, 214b zugeordneten Keilstangenpaaren 209a, 209c; 209b, 209d zueinander entgegengesetzt orientiert, sodass entgegengesetzte Drehbewegungen der Treibringe 214a, 214b zu einer radial gleichgerichteten Bewegung der Spannbackenpaare 205a, 205c; 205b, 205d führen.

Der Antrieb weist ferner Betätigungsmittel auf, welche ausgebildet sind, die beiden Treibringe 214a, 214b relativ zueinander zu verdrehen. Konkret umfassen diese eine Gewindespindel 218, welche in einem zur radialen Außenfläche offenen länglichen Aufnahmeraum 219 des Futterkörpers 202 angeordnet ist. Die Gewindespindel 218 weist in ihrer Längsrichtung zwei Gewindeabschnitte 220a, 220b mit zueinander entgegengesetzt verlaufenden Gewindesteigungen auf. Der Gewindeabschnitt 220a besitzt ein Linksgewinde, wohingegen der Gewindeabschnitt 220b mit einem Rechtsgewinde versehen ist. Jeder der beiden Gewindeabschnitte 220a, 220b dient dem Anlenken jeweils eines Treibrings 214a, 214b, um eine Drehbewegung der Gewindespindel 218 in entgegengesetzte Drehbewegungen der beiden Treibringe 214a, 214b umzusetzen. Dazu ist an jedem der beiden Treibringe 214a, 214b eine mit dem jeweiligen Gewindeabschnitt 220a, 220b in Eingriff stehende Spindelmutter 221 angeordnet. Diese sind mit einem an dem jeweiligen Treibring 214a, 214b in radialer Richtung beweglich gelagerten Gleitstein 217 drehbar um eine axial verlaufende Drehachse verbunden, um eine translatorische Bewegung der jeweiligen Spindelmutter 221 in eine Drehbewegung des korrespondierenden Treibrings 214a, 214b umzusetzen.

Zwischen den beiden Gewindeabschnitten 220a, 220b weist die Gewindespindel 218 in ihrer Längsrichtung einen mittleren Lagerungsabschnitt 222 mit einem kreisförmigen Querschnitt auf. Dieser ist in einer korrespondierenden Führungsbohrung 223 des Futterkörpers 202 gleitend in Längsrichtung der Gewindespindel 218 und drehbar um ihre Längsachse gelagert. Die Führungsbohrung 223 ist dabei in einem den Aufnahmeraum 219 des Futterkörpers 202 senkrecht zur Längsrichtung der Gewindespindel 218 durchsetzenden Steg 224 ausgebildet. Der Steg 224 ist dabei als separates Bauteil vorgesehen, welches in eine entsprechende Ausnehmung 225 im Aufnahmeraum 219 eingesetzt ist.

An der Gewindespindel 218 sind ferner Anschlagmittel ausgebildet, mittels derer die Beweglichkeit der Gewindespindel 218 in ihrer Längsrichtung begrenzt ist. Konkret handelt es sich dabei um an den Lagerungsabschnitt 222 angrenzende Anschlagflächen 226, durch deren Anlage an dem Steg 224 Endpositionen für die translatorische Bewegung der Gewindespindel 218 in ihrer Längsrichtung definiert sind.

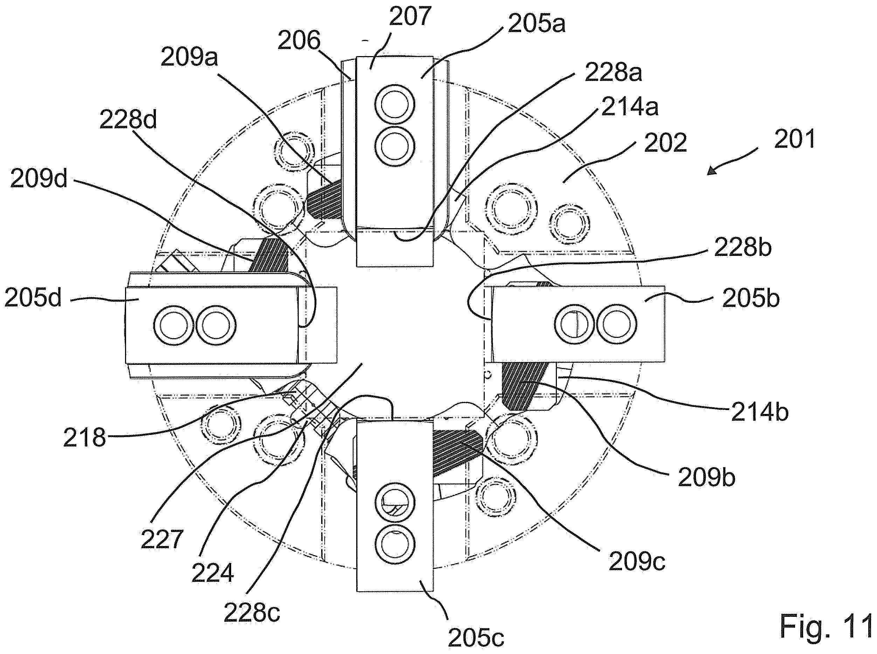

In den Figuren 11 bis 13 ist das erfindungsgemäße Spannfutter 201 mit verschiedenen Spannbackenstellungen dargestellt. Zur besseren Erkennbarkeit sind dabei der Futterkörper 202, wie auch ein zu spannendes rechteckiges, aber nicht quadratisches Werkstück 227 lediglich gestrichelt und durchsichtig dargestellt.

An den Spannbacken 205a, 205b, 205c, 205d sind dabei Spannflächen 228a, 228b, 228c, 228d ausgebildet, die zur Anlage an dem Werkstück 227 vorgesehen sind.

In Figur 11 ist erkennbar, dass sich keine der Spannflächen 228a, 228b, 228c, 228d in Anlage an dem Werkstück 227 befindet. Das Werkstück 227 kann somit in dieser Stellung der Spannbacken 205a, 205b, 205c, 205d in das Spannfutter 1 eingesetzt werden.

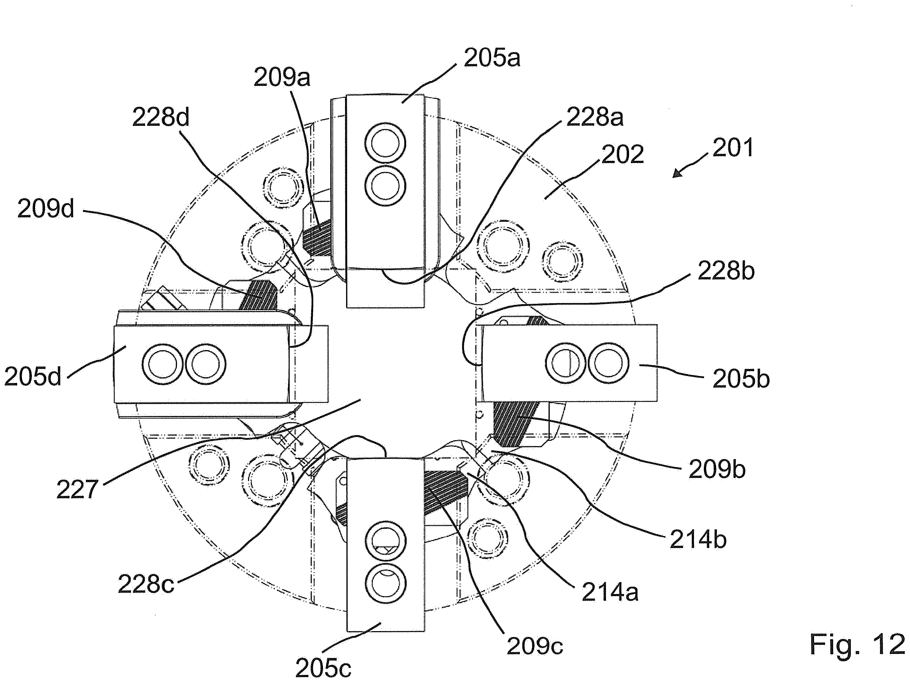

Soll das eingesetzte Werkstück 227 gespannt werden, so werden durch Drehen der Gewindespindel 218 die beiden Treibringe 214a, 214b relativ zueinander verdreht. Der Treibring 214a wird dabei im Uhrzeigersinn, der Treibring 214b gegen den Uhrzeigersinn gedreht. Dadurch, dass die Verzahnungen 210 der den Treibringen 214a, 214b zugeordneten Keilstangenpaare 209a, 209c; 209b, 209d zueinander derart orientiert sind, dass entgegengesetzte Drehbewegungen der Treibringe 214a, 214b zu einer radial gleichgerichteten Bewegung der Spannbacken 205a, 205b, 205c, 205d führen, werden durch die Drehbewegung der beiden Treibringe 214a, 214b relativ zueinander die Spannbacken 205a, 205b, 205c, 205d radial nach innen bewegt. Diese Bewegung ist zunächst undefiniert und schwimmend, da die absolute Drehbewegung der Treibringe 214a, 214b relativ zum Futterkörper 202 zunächst nicht definiert ist. Lediglich die Relativbewegung der beiden Treibringe 214a, 214b zueinander wird durch die Drehung der Gewindespindel 218 vorgegeben, bis eines der beiden Spannbackenpaare 205a, 205c mit der Außenkontur des Werkstücks 227 in Anlage kommt, wie dies in Figur 12 dargestellt ist. Durch die symmetrische Bewegung der jeweils einander gegenüberliegenden Spannbackenpaare 205a, 205c; 205b, 205d wird in beide senkrecht zueinander orientierten Richtungen der Führungsnuten 204 eine Zentrierung des Werkstücks 227 zur Futterachse X gewährleistet.

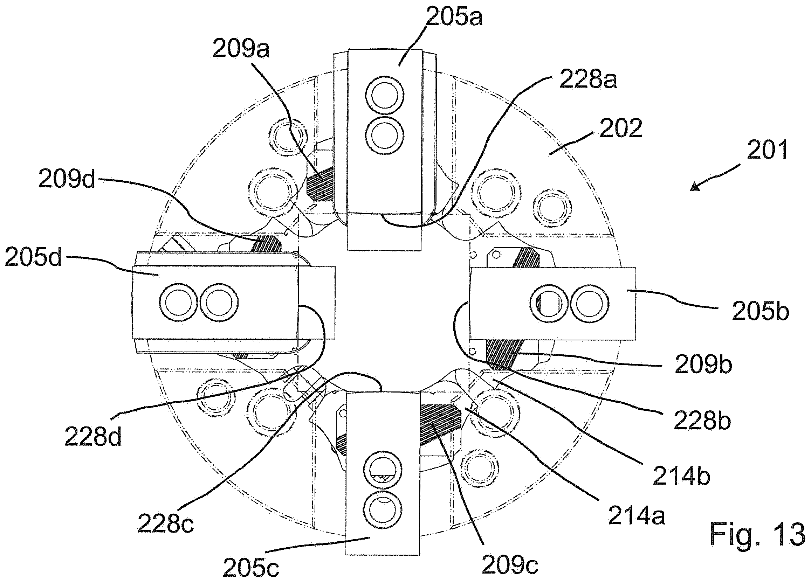

Wird ausgehend von der in Figur 12 dargestellten Stellung der Spannbacken 205a, 205b, 205c, 205d die Gewindespindel 218 weiter gedreht, so geht dies mit einer weiteren Drehbewegung des Treibrings 214b gegen den Uhrzeigersinn einher. Die Lage des Treibrings 214a bleibt dabei unverändert, sodass ein weiteres Verdrehen der Gewindespindel 218 mit einer translatorischen Bewegung in ihrer Längsrichtung einhergeht. Die Gewindespindel 218 kann so lange weitergedreht werden, bis auch das zweite Spannbackenpaar 205b, 205d an der Außenkontur des Werkstücks 227 in Anlage kommt, wie dies in Figur 13 dargestellt ist.

Sobald sämtliche Spannbacken 205a, 205b, 205c, 205d an der Außenkontur des Werkstücks 227 anliegen, wird die Spannkraft aufgebracht. Durch den vorliegenden Mechanismus wird es ermöglicht, ein Werkstück 227 mit einem rechteckigen und nicht quadratischen Querschnitt auf einfache Weise zu spannen und dabei durch die symmetrische Bewegung zur Futterachse X der jeweils einander gegenüberliegenden Spannbacken 205a, 205c; 205b, 205d relativ zu der Futterachse X eine präzise Zentrierung zu gewährleisten.

### Bezugszeichenliste

- 101: Spannfutter
- 102: Futterkörper
- 103: vordere Stirnfläche
- 104: Führungsnut
- 105a, 105b, 105c, 105d: Spannbacke
- 106: Grundbacke
- 107: Aufsatzbacke
- 108: Verzahnung
- 109a, 109b, 109c, 109d: Keilstange
- 110: Verzahnung
- 111: Gegenverzahnung
- 112: Keilstangentasche
- 113: Treibringeinheit
- 114a, 114b: Treibring
- 115: Vorsprung
- 116: Führungselement
- 117: Nut
- 118: Ansteuerelement
- 119: Mitnehmerelement
- 120: Bohrung
- 121a, 121b, 121c: Teilabschnitt
- 122: Gewindespindel
- 123: Aufnahmeraum
- 124: Spindelmutter
- 125: Gleitstein
- 126: Werkstück
- 127a, 127b, 127c, 127d: Spannflächen
- 201: Spannfutter
- 202: Futterkörper
- 203: vordere Stirnfläche
- 204: Führungsnut
- 205a, 205b, 205c,205d: Spannbacke
- 206: Grundbacke
- 207: Aufsatzbacke
- 208: Verzahnung
- 209a, 209b,209c, 209d: Keilstange
- 210: Verzahnung
- 211: Gegenverzahnung
- 212: Keilstangentasche
- 213: Treibringeinheit
- 214a, 214b: Treibring
- 215: Vorsprung
- 216: Nut
- 217: Gleitstein
- 218: Gewindespindel
- 219: Aufnahmeraum
- 220a, 220b: Gewindeabschnitt
- 221: Spindelmutter
- 222: Lagerungsabschnitt
- 223: Führungsbohrung
- 224: Steg
- 225: Ausnehmung
- 226: Anschlagfläche
- 227: Werkstück
- 228a, 228b, 228c, 228d: Spannfläche

- X: Futterachse

## Patentansprüche

1. Spannfutter (101) für Werkzeugmaschinen, insbesondere Drehmaschinen, mit
einem Futterkörper (102), in dessen vorderer Stirnfläche (103) vier paarweise einander gegenüberliegende Führungsnuten (104) zur Aufnahme jeweils einer Spannbacke (105a, 105b, 105c, 105d) ausgebildet sind, die sich radial zu einer zentralen Futterachse (X) erstrecken, und
einem Antrieb, der ausgebildet ist, um in jeweils einander gegenüberliegende Führungsnuten (104) eingesetzte Spannbacken (105a, 105b, 105c, 105d) paarweise gemeinsam zu verstellen,
wobei der Antrieb
jeder Führungsnut (104) zugeordnet eine Keilstange (109a, 109b, 109c, 109d), die in einer im Futterkörper (102) ausgebildeten, sich quer zur Führungsnut (104) erstreckenden Keilstangentasche translatorisch bewegbar geführt ist und an ihrer Vorderseite eine Verzahnung (110) trägt, welche mit einer entsprechenden Gegenverzahnung (111) einer Spannbacke (105a, 105b, 105c, 105d) in Eingriff steht oder bringbar ist, um eine Bewegung der Keilstangen (109a, 109b, 109c, 109d) in eine radialen Bewegung der Spannbacken (105a, 105b, 105c, 105d) umzusetzen,
ferner eine Treibringeinheit mit
zwei um die zentrale Futterachse (X) drehbar im Futterkörper (102) gelagerten Treibringen (114a, 114b) zum Antreiben jeweils zweier einander gegenüberliegender Spannbacken (105a, 105b, 105c, 105d), wobei an den Treibringen (114a, 114b) jeweils ein Paar einander gegenüberliegender Keilstangen (109a, 109b, 109c, 109d) radial bewegbar und um eine axial verlaufende Drehachse drehbar zu diesen gelagert sind, umfasst,
wobei die Verzahnungen (110) der den Treibringen (114a, 114b) zugeordneten Keilstangenpaare (109a, 109c; 109b, 109d) zueinander derart orientiert sind, dass gleichgerichtete Drehbewegungen der Treibringe (114a, 114b) zu radial gleichgerichteten Bewegungen der diesen zugeordneten Spannbacken (105a, 105c; 105b, 105d) führen, und
einem um die zentrale Futterachse (X) drehbar im Futterkörper (102) gelagerten Ansteuerelement (118), welches über einen Koppelmechanismus mit den Treibringen (114a, 114b) derart gekoppelt ist, dass eine Drehbewegung des Ansteuerelements um die Futterachse (X) zu einer gleichgerichteten Drehbewegung eines Treibrings (114a, 114b) oder zu gleichgerichteten Drehbewegungen beider Treibringe (114a, 114b) um die Futterachse (X) führt, und
Betätigungsmittel aufweist, welche ausgebildet sind, das Ansteuerelement (118) zu verdrehen, wobei
das Ansteuerelement (118) eine scheibenförmige Grundform aufweist und axial mittig zwischen den beiden Treibringen (114a, 114b) angeordnet ist, wobei
der Koppelmechanismus als Mitnehmermechanismus ausgebildet ist, welcher mindestens ein Mitnehmerelement (119) umfasst, das exzentrisch zur Futterachse (X) in dem Ansteuerelement (118) angeordnet ist und mit den beiden Treibringen (114a, 114b) in Eingriff steht, **dadurch gekennzeichnet, dass**
das mindestens eine Mitnehmerelement (119) als länglicher Bolzen ausgebildet und windschief zur Futterachse (X) kippbar in dem Ansteuerelement (118) gelagert ist.

2. Spannfutter (101) nach Anspruch 1, **dadurch gekennzeichnet, dass** das Ansteuerelement (118) ringförmig ausgebildet ist und eine zentrale Durchgangsöffnung aufweist.

3. Spannfutter (101) nach Anspruch 1 oder Anspruch 2, **dadurch gekennzeichnet, dass** in den beiden Treibringen (114a, 114b) exzentrisch zur Futterachse (X) angeordnete Bohrungen (120) ausgebildet sind, in welche das mindestens eine Mitnehmerelement (119) eingreift, wobei besonders bevorzugt
das mindestens eine Mitnehmerelement (119) in seiner Längsrichtung drei Teilabschnitte (121a, 121b, 121c) aufweist, die jeweils eine konvexe, ballige Außenkontur aufweisen und dass die in den Treibringen (114a, 114b) angeordneten Bohrungen (120) als zylindrische Bohrungen ausgebildet sind.

4. Spannfutter (101) nach einem der vorherigen Ansprüche, **dadurch gekennzeichnet, dass** der Koppelmechanismus genau vier Mitnehmerelemente (119) umfasst, wobei insbesondere
die Mitnehmerelemente (119) in einem gleichen Abstand zur zentralen Futterachse (X) gleichmäßig entlang des Umfangs angeordnet sind.

5. Spannfutter (101) nach einem der vorherigen Ansprüche, **dadurch gekennzeichnet, dass** die Betätigungsmittel eine Gewindespindel (122) umfassen, welche drehbar gelagert in einem zur radialen Außenfläche offenen länglichen Aufnahmeraum (123) des Futterkörpers angeordnet ist, wobei insbesondere
die Gewindespindel (122) mit einer Spindelmutter (124) in Eingriff steht, die mit einem an dem Ansteuerelement (118) in radialer Richtung beweglich gelagerten Gleitstein (125) drehbar um eine axial verlaufende Drehachse verbunden ist, um eine translatorische Bewegung der Spindelmutter (124) in eine Drehbewegung des Ansteuerelements (118) umzusetzen.

6. Spannfutter (201) für Werkzeugmaschinen, insbesondere Drehmaschinen, mit
einem Futterkörper (202), in dessen vorderer Stirnseite (203) vier paarweise einander gegenüberliegende Führungsnuten (204) zur Aufnahme jeweils einer Spannbacke (205a, 205b, 205c, 205d) ausgebildet sind, die sich radial zu einer zentralen Futterachse (X) erstrecken, und
einem Antrieb, der ausgebildet ist, um in jeweils einander gegenüberliegende Führungsnuten (4) eingesetzte Spannbacken (205a, 205b, 205c, 205d) paarweise gemeinsam zu verstellen,
wobei der Antrieb
jeder Führungsnut (4) zugeordnet eine Keilstange (209a, 209b, 209c, 209d) aufweist, die in einer im Futterkörper (202) ausgebildeten, sich quer zur Führungsnut (204) erstreckenden Keilstangentasche (212) translatorisch bewegbar geführt ist und an ihrer Vorderseite eine Verzahnung (210) trägt, welche mit einer entsprechenden Gegenverzahnung (211) einer Spannbacke (205a, 205b, 205c, 205d) in Eingriff steht oder bringbar ist, um eine Bewegung der Keilstangen (209a, 209b, 209c, 209d) in eine radiale Bewegung der Spannbacken (205a, 205b, 205c, 205d) umzusetzen, und
ferner eine Treibringeinheit (213) mit
zwei um die zentrale Futterachse (X) drehbar im Futterkörper (202) gelagerten Treibringen (214a, 214b) zum Antreiben jeweils zweier einander gegenüberliegender Spannbacken (205a, 205b, 205c, 205d), wobei an den Treibringen (214a, 214b) jeweils ein Paar einander gegenüberliegender Keilstangen (209a, 209b, 209c, 209d) radial bewegbar und um eine axial verlaufende Drehachse drehbar zu diesen gelagert sind, umfasst, wobei der Antrieb außerdem Betätigungsmittel aufweist, welche ausgebildet sind, die beiden Treibringe (214a, 214b) relativ zueinander zu verdrehen,
**dadurch gekennzeichnet, dass**
die Verzahnungen (210) der den Treibringen (214a, 214b) zugeordneten Keilstangenpaare zueinander derart orientiert sind, dass entgegengesetzte Drehbewegungen der Treibringe (214a, 214b) zu einer radial gleichgerichteten Bewegung der diesen zugeordneten Spannbacken (205a, 205c; 205b, 205d) führen.

7. Spannfutter (201) nach Anspruch 6, **dadurch gekennzeichnet, dass** die Betätigungsmittel eine Gewindespindel (218) umfassen, welche in einem zur radialen Außenfläche offenen länglichen Aufnahmeraum (219) des Futterkörpers (202) angeordnet ist, wobei insbesondere
die Gewindespindel (218) in ihrer Längsrichtung zwei Gewindeabschnitte (220a, 220b) mit zueinander entgegengesetzt verlaufenden Gewindesteigungen zum Anlenken jeweils eines Treibrings (214a, 214b) aufweist, um eine Drehbewegung der Gewindespindel (218) in entgegengesetzte Drehbewegungen der beiden Treibringe (214a, 214b) umzusetzen.

8. Spannfutter (201) nach Anspruch 7, **dadurch gekennzeichnet, dass** an jedem der beiden Treibringe (214a, 214b) eine mit der Gewindespindel (218) in Eingriff stehende Spindelmutter (221) angeordnet ist, die mit einem an dem jeweiligen Treibring (214a, 214b) in radialer Richtung beweglich gelagerten Gleitstein (217) drehbar um eine axial verlaufende Drehachse verbunden sind, um eine translatorische Bewegung der jeweiligen Spindelmutter (221) in eine Drehbewegung des korrespondierenden Treibrings (214a, 214b) umzusetzen,
wobei insbesondere die Gewindespindel (221) in ihrer Längsrichtung zwischen den beiden Gewindeabschnitten (220a, 220b) einen mittleren Lagerungsabschnitt (222) mit einem kreisförmigen Querschnitt aufweist, der in einer korrespondierenden Führungsbohrung (223) des Futterkörpers (202) gleitend in Längsrichtung der Gewindespindel (221) und drehbar um ihre Längsachse gelagert ist und bevorzugt
die Führungsbohrung (223) in einem den Aufnahmeraum des Futterkörpers (202) quer, insbesondere senkrecht zur Längsrichtung der Gewindespindel (221) durchsetzenden Steg (224) ausgebildet ist.

9. Spannfutter (201) nach Anspruch 8, **dadurch gekennzeichnet, dass** an der Gewindespindel (221) Anschlagmittel ausgebildet sind, mittels derer die Beweglichkeit der Gewindespindel (221) in ihrer Längsrichtung begrenzt ist, wobei insbesondere
die Anschlagmittel als an den Lagerungsabschnitt (222) angrenzende Anschlagflächen (226) ausgebildet sind, durch deren Anlage an dem Steg (224) die Beweglichkeit der Gewindespindel (221) in ihrer Längsrichtung begrenzt ist.

10. Spannfutter (101; 201) nach einem der vorherigen Ansprüche, **dadurch gekennzeichnet, dass** jeder Treibring (114a, 114b; 214a, 214b) einen inneren ringförmigen, insbesondere kreisringförmigen Abschnitt und zwei von diesem radial nach außen vorstehende, einander zur Futterachse (X) gegenüberliegende Vorsprünge zur Lagerung der Keilstangen (109a, 109b, 109c, 109d; 209a, 209b, 209c, 209d) aufweist,
wobei insbesondere die Treibringe (114a, 114b; 214a, 214b) im inneren ringförmigen Abschnitt gegenüber dem jeweiligen Vorsprung axial verjüngt ausgebildet sind, sodass die Vorsprünge der beiden Treibringe (114a, 114b; 214a, 214b) in axialer Richtung bündig zueinander angeordnet sind.

11. Spannfutter (201) nach Anspruch 10, **dadurch gekennzeichnet, dass** in den vorderen Stirnflächen (203) der Vorsprünge sich radial erstreckende Nuten (216) ausgebildet sind, in welchen radial zu den Treibringen (214a, 214b) bewegbare Gleitsteine (217) angeordnet sind, in denen die Keilstangen (209a, 209b, 209c, 209d) um eine axial verlaufende Drehachse drehbar gelagert sind oder
dass in den Vorsprüngen der Treibringe (114a, 114b) Führungselemente (116) angeordnet sind, welche drehbar um eine axial verlaufende Drehachse in den Treibringen (114a, 114b) gelagert sind und eine Nut (117) aufweisen, in welcher die Keilstangen (109a, 109b, 109c, 109d) gleitend gelagert sind.

12. Spannfutter (101; 201) nach einem der vorherigen Ansprüche, **dadurch gekennzeichnet, dass** die Keilstangen (109a, 109b, 109c, 109d; 209a, 209b, 209c, 209d) eine quaderförmige Grundform aufweisen und/oder
dass sich die Keilstangentaschen (112; 212) senkrecht zur Richtung der jeweiligen Führungsnuten (104; 204) erstrecken.

13. Spannfutter (101; 201) nach einem der vorherigen Ansprüche,
**dadurch gekennzeichnet,**
**dass** die Führungsnuten (104; 204) rechtwinklig zueinander angeordnet sind und/oder
**dass** der Futterkörper (102; 202) zweiteilig ausgebildet ist und einen vorderen und einen hinteren Futterkörperabschnitt umfasst.

14. Spannfutter (101; 201) nach einem der vorherigen Ansprüche, **dadurch gekennzeichnet, dass** in jeder Führungsnut (104; 204) eine Grundbacke (106; 206) zum Anbringen einer Aufsatzbacke (107; 207) angeordnet ist, die eine mit der Verzahnung (108; 208) der Keilstange (109a, 109b, 109c, 109d; 209a, 209b, 209c, 209d) in Eingriff stehende Gegenverzahnung (111; 211) aufweist.

15. Spannfutter (101; 201) nach Anspruch 14, **dadurch gekennzeichnet, dass** die Grundbacken (106; 206) Befestigungsmittel zum lösbaren Befestigen von Aufsatzbacken (107; 207) aufweisen,
wobei insbesondere die Grundbacken (106; 206) Formschlusselemente zum Übertragen einer Spannkraft aufweisen, die mit korrespondierenden Gegenelementen von Aufsatzbacken (107; 207) in Eingriff bringbar sind, wobei
es sich bei den Formschlusselementen bevorzugt um eine Verzahnung (108; 208) handelt.

## Claims

1. Chuck (101) for machine tools, in particular lathes, with
a chuck body (102), in the front end face (103) of which four guide grooves (104), which are opposite one another in pairs, are formed for receiving in each case one clamping jaw (105a, 105b, 105c, 105d), which extend radially to a central chuck axis (X), and
a drive which is designed to move clamping jaws (105a, 105b, 105c, 105d) inserted in opposite guide grooves (104) together in pairs,
wherein the drive comprises
a wedge bar (109a, 109b, 109c, 109d) associated with each guide groove (104) which is guided for translational movement in a wedge bar pocket formed in the chuck body (102) and extending transversely to the guide groove (104) and which carries a toothing (110) on its front side, which is or can be brought into engagement with a corresponding mating toothing (111) of a clamping jaw (105a, 105b, 105c, 105d) in order to convert a movement of the wedge bars (109a, 109b, 109c, 109d) into a radial movement of the clamping jaws (105a, 105b, 105c, 105d),
furthermore a drive ring unit with
two drive rings (114a, 114b) rotatably mounted in the chuck body (102) about the central chuck axis (X) for driving two opposing clamping jaws (105a, 105b, 105c, 105d), wherein a pair of opposing wedge bars (109a, 109b, 109c, 109d) are mounted on the drive rings (114a, 114b) so as to be radially movable and rotatable relative thereto about an axially extending axis of rotation,
wherein the toothings (110) of the pairs of wedge bars (109a, 109c; 109b, 109d) associated with the drive rings (114a, 114b) are oriented relative to one another in such a way that rotational movements of the drive rings (114a, 114b) in the same direction lead to radially co-directed movements of the clamping jaws (105a, 105c; 105b, 105d) associated therewith, and
an actuating element (118) which is mounted in the chuck body (102) so as to be rotatable about the central chuck axis (X) and which is coupled to the drive rings (114a, 114b) via a coupling mechanism in such a way that a rotary movement of the actuating element about the chuck axis (X) leads to a rotational movement of one drive ring (114a, 114b) in the same direction or to rotational movements of both drive rings (114a, 114b) in the same direction about the chuck axis (X), and
actuating means which are designed to rotate the actuating element (118), wherein
the actuating element (118) has a disk-shaped basic form and is arranged axially centrally between the two drive rings (114a, 114b), wherein
the coupling mechanism is designed as a driver mechanism which comprises at least one driver element (119) which is arranged eccentrically to the chuck axis (X) in the actuating element (118) and is in engagement with the two drive rings (114a, 114b), **characterized in that**
the at least one driver element (119) is designed as an elongated bolt and is mounted in the control element (118) so as to be tiltable at an angle to the chuck axis (X).

2. Chuck (101) according to claim 1, **characterized in that** the actuating element (118) is annular in shape and has a central through-opening.

3. Chuck (101) according to claim 1 or claim 2, **characterized in that** bores (120) are formed in the two drive rings (114a, 114b), which are arranged eccentrically to the chuck axis (X) and in which the at least one driver element (119) engages, wherein particularly preferably
the at least one driver element (119) has three partial sections (121a, 121b, 121c) in its longitudinal direction, each of which has a convex, spherical outer contour, and that the bores (120) arranged in the drive rings (114a, 114b) are designed as cylindrical bores.

4. Chuck (101) according to one of the preceding claims, **characterized in that** the coupling mechanism comprises exactly four driver elements (119), wherein in particular
the driver elements (119) are arranged uniformly along the circumference at an equal distance from the central chuck axis (X).

5. Chuck (101) according to one of the preceding claims, **characterized in that** the actuating means comprise a threaded spindle (122) which is arranged rotatably in an elongate receiving space (123) of the chuck body which is open towards the radial outer surface, wherein in particular
the threaded spindle (122) is in engagement with a spindle nut (124) which is connected to a sliding block (125) mounted on the actuating element (118) so as to be movable in the radial direction and rotatable about an axially extending axis of rotation, in order to convert a translatory movement of the spindle nut (124) into a rotary movement of the actuating element (118).

6. Chuck (201) for machine tools, in particular lathes, with
a chuck body (202), in the front end face (203) of which four guide grooves (204), which are opposite one another in pairs, are formed for receiving in each case one clamping jaw (205a, 205b, 205c, 205d), which extend radially to a central chuck axis (X), and
a drive which is designed to move clamping jaws (205a, 205b, 205c, 205d) inserted in opposite guide grooves (4) together in pairs,
wherein the drive comprises
a wedge bar (209a, 209b, 209c, 209d) , associated with each guide groove (4), which is guided for a translational movement in a wedge bar pocket (212) formed in the chuck body (202) and extending transversely to the guide groove (204) and which carriers a toothing (210) on its front side, which is or can be brought into engagement with a corresponding mating toothing (211) of a clamping jaw (205a, 205b, 205c, 205d) in order to convert a movement of the wedge bars (209a, 209b, 209c, 209d) into a radial movement of the clamping jaws (205a, 205b, 205c, 205d), and
furthermore a drive ring unit (213) with
two drive rings (214a, 214b) rotatably mounted in the chuck body (202) about the central chuck axis (X) for driving two opposing clamping jaws (205a, 205b, 205c, 205d), wherein a pair of opposing wedge bars (209a, 209b, 209c, 209d) are mounted on the drive rings (214a, 214b) so as to be radially moveable and rotatable relativethereto about an axially extending axis of rotation, the drive also having actuating means which are designed to rotate the two drive rings(214a, 214b) relative to one another, **characterized in that**
the toothing (210) of the pairs of wedge bars assigned to the drive rings (214a, 214b) are oriented relative to one another in such a way that opposing rotational movements of the drive rings (214a, 214b) lead to radially co-directed movements of the clamping jaws (205a, 205c; 205b, 205d) associated therwithe.

7. Chuck (201) according to claim 6, **characterized in that** the actuating means comprise a threaded spindle (218) which is arranged in an elongate receiving space (219) of the chuck body (202) which is open towards the radial outer surface, wherein in particular
the threaded spindle (218) has two threaded sections (220a, 220b) in its longitudinal direction with thread pitches running in opposite directions to one another for articulating a respective drive ring (214a, 214b) in order to convert a rotary movement of the threaded spindle (218) into opposite rotary movements of the two drive rings (214a, 214b).

8. Chuck (201) according to claim 7, **characterized in that** on each of the two drive rings (214a, 214b) there is arranged a spindle nut (221) in engagement with the threaded spindle (218), which is connected rotatably about an axial rotation axis to a sliding block (217) moveably mounted on the respective driving (214a, 214b) in the radial direction in order to convert a translational movement of the respective spindle nut (221) into a rotary movement of the corresponding driving(214a, 214b),
wherein in particular the threaded spindle (221) has in its longitudinal direction between the two threaded portions (220a, 220b) a central bearing portion (222) with a circular cross-section, which is mounted in a corresponding guide bore (223) of the chuck body (202) so as to slide in the longitudinal direction of the threaded spindle (221) and rotate about its longitudinal axis and preferably has a central bearing portion (222) with a circular cross-section.
the guide bore (223) is formed in a web (224) passing through the receiving space of the chuck body (202) transversely, in particular perpendicular to the longitudinal direction of the threaded spindle (221).

9. Chuck (201) according to claim 8, **characterized in that** stop means are formed on the threaded spindle (221), by means of which the mobility of the threaded spindle (221) is limited in its longitudinal direction, wherein in particular
the stop means are designed as stop surfaces (226) adjacent to the bearing section (222), the movement of the threaded spindle (221) in its longitudinal direction being limited by their contact with the web (224).

10. Chuck (101; 201) according to one of the preceding claims, **characterized in that** each drive ring (114a, 114b; 214a, 214b) has an inner annular, in particular circular ring-shaped section and two projections projecting radially outwards from the latter and lying opposite one another with respect to the chuck axis (X) for mounting the wedge bars (109a, 109b, 109c, 109d; 209a, 209b, 209c, 209d),
wherein, in particular, the drive rings (114a, 114b; 214a, 214b) are axially tapered in the inner annular section relative to the respective projection, so that the projections of the two drive rings (114a, 114b; 214a, 214b) are arranged flush with one another in the axial direction.

11. Chuck (201) according to claim 10, **characterized in that** radially extending grooves (216) are formed in the front end faces (203) of the projections, in which sliding blocks (217) are arranged which are movable radially with respect to the drive rings (214a, 214b) and in which the wedge bars (209a, 209b, 209c, 209d) are mounted rotatably about an axially extending axis of rotation, or
**in that** guide elements (116) are arranged in the projections of the drive rings (114a, 114b), which are mounted in the drive rings (114a, 114b) so as to be rotatable about an axially extending axis of rotation and have a groove (117) in which the wedge bars (109a, 109b, 109c, 109d) are mounted so as to slide.

12. Chuck (101; 201) according to one of the preceding claims, **characterized in that** the wedge bars (109a, 109b, 109c, 109d; 209a, 209b, 209c, 209d) have a cuboid basic shape and/or
that the wedge bar pockets (112; 212) extend perpendicular to the direction of the respective guide grooves (104; 204).

13. Chuck (101; 201) according to one of the preceding claims, **characterized in that,** the guide grooves (104; 204) are arranged at right angles to one another and/or
**in that** the lining body (102; 202) is formed in two parts and comprises a front and a rear lining body section.

14. Chuck (101; 201) according to one of the preceding claims, **characterized in that** a base jaw (106; 206) is arranged in each guide groove (104; 204) for attaching a top jaw (107; 207), which has a mating toothing (111; 211) in engagement with the toothing (108; 208) of the wedge bar (109a, 109b, 109c, 109d; 209a, 209b, 209c, 209d).

15. Chuck (101; 201) according to claim 14, **characterized in that** the base jaws (106; 206) have fastening means for releasably fastening top jaws (107; 207),
wherein in particular the base jaws (106; 206) have positive-locking elements for transmitting a clamping force, which can be brought into engagement with corresponding counter elements of top jaws (107; 207), wherein
the positive locking elements are preferably a toothing (108; 208).

## Revendications

1. Mandrin de serrage (101) pour machines-outils, en particulier pour tours, com prenant
un corps de mandrin (102), dans la face frontale avant (103) duquel sont formées quatre rainures de guidage (104) opposées par paires, destinées à recevoir chacune une mâchoire de serrage (105a, 105b, 105c, 105d), qui s'étendent radialement par rapport à un axe central de mandrin (X), et
un entraînement qui est conçu pour déplacer ensemble par paires des mâchoires de serrage (105a, 105b, 105c, 105d) insérées dans des rainures de guidage (104) respectivement opposées les unes aux autres,
où l'entraînement comprends
associé à chaque rainure de guidage (104) une tige de clavette (109a, 109b, 109c, 109d) qui est guidée de manière mobile en translation dans une poche de tige de clavette formée dans le corps de mandrin (102) et s'étendant transversalement à la rainure de guidage (104) et qui porte sur sa face avant une denture (110), qui est ou peut être amenée en prise avec une contre-denture (111) correspondante d'une mâchoire de serrage (105a, 105b, 105c, 105d), afin de convertir un mouvement des tiges de clavette (109a, 109b, 109c, 109d) en un mouvement radial des mâchoires de serrage (105a, 105b, 105c, 105d),
en outre une unité de anneau d'entraînement avec
deux anneaux d'entraînement (114a, 114b) montés dans le corps de mandrin (102) de manière à pouvoir toumer autour de l'axe central (X) du mandrin, pour entraîner respectivement deux mâchoires de serrage (105a, 105b, 105c, 105d) opposées l'une à l'autre, une paire de tiges de clavelte (109a, 109b, 109c, 109d) opposées l'une à l'autre étant respectivement mobiles radialement sur les anneaux d'entraînement (114a, 114b) et de manière à pouvoir tourner par rapport à ceux-ci autour d'un axe de rotation s'étendant axialement,
les dentures (110) des paires de triges de clavette (109a, 109c ; 109b, 109d) associées aux anneaux d'entraînement (114a, 114b) étant orientées l'une par rapport à l'autre de telle sorte que des mouvements de rotation de même sens des anneaux d'entraînement (114a, 114b) entraînent des mouvements de même sens radial des mâchoires de serrage (105a, 105c ; 105b, 105d) associées à celles-ci, et
un élément de commande (118) monté dans le corps de mandrin (102) de manière à pouvoir toumer autour de l'axe central de mandrin (X), lequel est couplé aux anneaux d'entraînement (114a, 114b) par l'intermédiaire d'un mécanisme de couplage de telle sorte qu'un mouvement de rotation de l'élément de commande autour de l'axe de mandrin (X) entraîne un mouvement de rotation de même sens d'un anneau d'entraînement (114a, 114b) ou des mouvements de rotation de même sens des deux anneaux d'entraînement (114a, 114b) autour de l'axe de mandrin (X), et
des moyens d'actionnement qui sont conçus pour faire tourner l'élément d'entraînement (118), oùu
l'élément de commande (118) présente une forme de base en forme de disque et est disposé axialement au centre entre les deux anneaux d'entraînement (114a, 114b), où
le mécanisme de couplage est conçu comme un mécanisme d'entraînement qui comprend au moins un élément d'entraînement (119) qui est disposé de manière excentrée par rapport à l'axe de mandrin (X) dans l'élément d'entraînement (118) et qui est en prise avec les deux anneaux d'entraînement (114a, 114b), **caractérisé en ce que**
l'au moins un élément d'entraînement (119) est réalisé sous la forme d'un boulon allongé et est logé de manière à pouvoir basculer dans l'élément de commande (118) en étant décalé angulairement par rapport à l'axe de mandrin (X).

2. Mandrin (101) selon la revendication 1, **caractérisé en ce que** l'élément de commande (118) est de forme annulaire et présente une ouverture centrale de passage.

3. mandrin (101) selon la revendication 1 ou la revendication 2, **caractérisé en ce que** dans les deux anneaux d'entraînement (114a, 114b) sont formés des alésages (120) disposés de manière excentrée par rapport à l'axe (X) du mandrin, dans lesquels s'engage au moins un élément d'entraînement (119), où de manière particulièrement préférée
le au moins un élément d'entraînement (119) présente dans sa direction longitudinale trois sections partielles (121a, 121b, 121c) qui présentent chacune un contour extérieur convexe et bombé et **en ce que** les alésages (120) disposés dans les anneaux d'entraînement (114a, 114b) sont réalisés sous forme d'alésages cylindriques.

4. Mandrin (101) selon l'une des revendications précédentes, **caractérisé en ce que** le mécanisme de couplage comprend exactement quatre éléments d'entraînement (119), où en particulier
les éléments d'entraînement (119) sont disposés à une distance égale de l'axe central (X) du mandrin, de manière uniforme le long de la circonférence.

5. Mandrin (101) selon l'une quelconque des revendications précédentes, **caractérisé en ce que** les moyens d'actionnement comprennent une tige filetée (122) montée à rotation dans un logement allongé (123) du corps de mandrin ouvert sur la surface radialement extérieure, où en particulier
la broche filetée (122) est en prise avec un écrou de broche (124) qui est relié à un coulisseau (125) monté mobile en direction radiale sur l'élément de commande (118) de manière à pouvoir toumer autour d'un axe de rotation s'étendant axialement, afin de convertir un mouvement de translation de l'écrou de broche (124) en un mouvement de rotation de l'élément de commande (118).

6. Mandrins (201) pour machines-outils, notamment pour tours, comportant
un corps de mandrin (202), dans la face frontale avant (203) duquel sont formées quatre rainures de guidage (204) opposées par paires, destinées à recevoir chacune une mâchoire de serrage (205a, 205b, 205c, 205d), qui s'étendent radialement par rapport à un axe central (X) du mandrin, et
un entraînement qui est conçu pour déplacer ensemble par paires des mâchoires de serrage (205a, 205b, 205c, 205d) insérées dans des rainures de guidage (4) respectivement opposées les unes aux autres,
où l'entraînement comprends
associée à chaque rainure de guidage (4) une tige de clavette (209a, 209b, 209c, 209d) qui est guidée de manière mobile en translation dans une poche de barre de clavette (212) formée dans le corps de mandrin (202) et s'étendant transversalement à la rainure de guidage (204) et qui porte sur sa face avant une denture (210), qui est ou peut être amenée en prise avec une contre-denture (211) correspondante d'une mâchoire de serrage (205a, 205b, 205c, 205d), afin de convertir un mouvement des tiges de clavette (209a, 209b, 209c, 209d) en un mouvement radial des mâchoires de serrage (205a, 205b, 205c, 205d), et
en outre une unité d'anneau d'entraînement (213) avec
deux anneaux d'entraînement (214a, 214b) montés dans le corps de mandrin (202) de manière à pouvoir toumer autour de l'axe central du mandrin (X) pour entraîner respectivement deux mâchoires de serrage (205a, 205b, 205c, 205d) opposées l'une à l'autre, une paire de tige de clavette (209a, 209b, 205c, 205d) opposées l'une à l'autre étant respectivement montées sur les anneaux d'entraînement (214a, 214b) de manière mobiles radialement et à pouvoir toumer par rapport à celles-ci autour d'un axe de rotation s'étendant axialement,
l'entraînement présentant en outre des moyens d'actionnement qui sont conçus pour faire toumer les deux anneaux d'entraînement (214a, 214b) l'un par rapport à l'autre, **caractérisé en ce que**
les dentures (210) des paires de tringles à clavette associées aux anneaux d'entraînement (214a, 214b) sont orientées l'une par rapport à l'autre de telle sorte que des mouvements de rotation opposés des anneaux d'entraînement (214a, 214b) entraînent un mouvement radial de même sens des mâchoires de serrage (205a, 205c ; 205b, 205d) associées à celles-ci.

7. Mandrin (201) selon la revendication 6, **caractérisé en ce que** les moyens d'actionnement comprennent une tige filetée (218) disposée dans un logement allongé (219) du corps de mandrin (202) ouvert sur la surface radialement extérieure, où en particuier
la broche filetée (218) présente dans sa direction longitudinale deux sections filetées (220a, 220b) avec des pas de vis s'étendant en sens inverse l'un de l'autre pour l'articulation respectivement d'une anneau d'entraînement (214a, 214b), afin de convertir un mouvement de rotation de la broche filetée (218) en mouvements de rotation opposés des deux anneaux d'entraînement (214a, 214b).

8. Mandrin de serrage (201) selon la revendication 7, **caractérisé en ce que** sur chacune des deux anneaux d'entraînement (214a, 214b) est disposé un écrou de broche (221) en prise avec la broche filetée (218), qui est relié à un coulisseau monté sur l'anneau d'entraînement respective (214a, 214b) sont reliés de manière à pouvoir toumer autour d'un axe de rotation s'étendant axialement, afin de convertir un mouvement de translation de l'écrou de broche respectif (221) en un mouvement de rotation de l'anneau d'entraînement correspondante (214a, 214b),
dans lequel, en particulier, la broche filetée (221) présente, dans sa direction longitudinale, entre les deux parties filetées (220a, 220b), une partie de palier centrale (222) de section transversale circulaire, qui est montée dans un alésage de guidage correspondant (223) du corps de mandrin (202) de manière à pouvoir coulisser dans la direction longitudinale de la broche filetée (221) et à pouvoir tourner autour de son axe longitudinal, et de préférence
l'alésage de guidage (223) est réalisé dans une nervure (224) traversant l'espace de réception du corps de mandrin (202) transversalement, en particulier perpendiculairement à la direction longitudinale de la broche filetée (221).

9. Mandrin (201) selon la revendication 8, **caractérisé en ce que** des moyens de butée sont formés sur la broche filetée (221), au moyen desquels la mobilité de la broche filetée (221) est limitée dans son sens longitudinal, en particulier
les moyens de butée sont réalisés sous forme de surfaces de butée (226) adjacentes à la section de palier (222), dont l'appui sur l'entretoise (224) limite la mobilité de la broche filetée (221) dans sa direction longitudinale.

10. Mandrin (101 ; 201) selon l'une des revendications précédentes, **caractérisé en ce que** chaque anneau d'entraînement (114a, 114b ; 214a, 214b) présente une section annulaire intérieure, en particulier en forme d'anneau circulaire, et deux saillies faisant saillie radialement vers l'extérieur à partir de celle-ci, opposées l'une à l'autre par rapport à l'axe (X) du mandrin, pour le montage des anneaux d'entraînement (109a, 109b, 109c, 109d ; 209a, 209b, 209c, 209d),
les anneaux d'entraînement (114a, 114b ; 214a, 214b) étant en particulier réalisés dans la section annulaire intérieure de manière à se rétrécir axialement par rapport à la saillie respective, de sorte que les saillies des deux anneaux d'entraînement (114a, 114b ; 214a, 214b) sont disposées à fleur l'une de l'autre dans la direction axiale.

11. Mandrin de serrage (201) selon la revendication 10, **caractérisé en ce que** des rainures (216) s'étendant radialement sont formées dans les faces frontales avant (203) des saillies, dans lesquelles sont disposés des coulisseaux (217) mobiles radialement par rapport aux anneaux d'entraînement (214a, 214b), dans lesquels les tiges de clavette (209a, 209b, 209c, 209d) sont logées de manière à pouvoir tourner autour d'un axe de rotation s'étendant axialement, ou **en ce que** le mandrin de serrage (201) selon la revendication 10 est équipé d'une anneau d'entraînement (214a).
**que** des éléments de guidage (116) sont disposés dans les saillies des anneaux d'entraînement (114a, 114b), lesquels sont logés dans les d'entraînement (114a, 114b) de manière à pouvoir tourner autour d'un axe de rotation s'étendant axialement et présentent une rainure (117) dans laquelle les tiges de clavette (109a, 109b, 109c, 109d) sont logées de manière coulissante.

12. Mandrin (101; 201) selon l'une quelconque des revendications précédentes, **caractérisé en ce que** les tiges de clavette (109a, 109b, 109c, 109d ; 209a, 209b, 209c, 209d) ont une forme de base parallélépipédique, et/ou
**en ce que** les poches de tige de clavette (112; 212) s'étendent perpendiculairement à la direction des rainures de guidage respectives (104; 204).

13. Mandrin (101; 201) selon l'une quelconque des revendications précédentes, **caractérisé en ce que** les rainures de guidage (104; 204) sont disposées à angle droit les unes par rapport aux autres et/ou
**en ce que** le corps de mandrin (102; 202) est réalisé en deux parties et comprend une section de corps de mandrin avant et une section de corps de mandrin arrière.

14. Mandrin (101; 201) selon l'une des revendications précédentes, **caractérisé en ce que** dans chaque rainure de guidage (104; 204) est disposée une mâchoire de base (106 ; 206) pour le montage d'une mâchoire rapportée (107 ; 207), qui présente une contre-denture (111 ; 211) en prise avec la denture (108 ; 208) de la tige de clavette (109a, 109b, 109c, 109d ; 209a, 209b, 209c, 209d).

15. Mandrin (101 ; 201) selon la revendication 14, **caractérisé en ce que** les mâchoires de base (106 ; 206) comportent des moyens de fixation pour fixer de manière amovible des mâchoires rapportées (107 ; 207),
dans lequel en particulier les mâchoires de base (106 ; 206) présentent des éléments de fermeture de forme pour transmettre une force de serrage, qui peuvent être amenés en prise avec des contre-éléments correspondants de mâchoires rapportées (107 ; 207), dans lequel
il s'agit de préférence d'une denture (108 ; 208) pour les éléments de fermeture de forme.
